# EUROPEAN PATENT SPECIFICATION

(11) **EP 3 610 652 B1**
(45) Date of publication and mention of the grant of the patent: **30.03.2022**
(21) Application number: 18703848.4
(22) Date of filing: 05.02.2018
(51) Int. Cl.: H04N 21/418, H04N 21/4623, H04N 21/4408, H04N 21/266

(54) **RECEIVING AUDIO AND/OR VIDEO CONTENT**
EMPFANG VON AUDIO- UND / ODER VIDEOINHALT
RÉCEPTION DE CONTENU AUDIO ET/OU VIDÉO

(30) Priority: 11.04.2017 GB 201705820
(43) Date of publication of application: 19.02.2020
(73) Proprietor: Sony Group Corporation, Tokyo 108-0075 (JP); Sony Europe Limited, Weybridge, Surrey KT13 0XW (GB)
(72) Inventor: HILL-JOWETT, David, Basingstoke RG24 8LZ (GB)
(74) Representative: D Young & Co LLP
(86) International application number: PCT/GB2018/050322
(87) International publication number: WO 2018/189505

(56) References cited:
- EP-A1- 2 802 152
- US-A1- 2002 021 805
- US-A1- 2009 290 711
- US-A1- 2014 325 550
- US-A1- 2015 078 551
- CI PLUS: "CI Plus Specification. Content Security Extensions to the Common Interface", INTERNET CITATION, 14 January 2011 (2011-01-14), pages 1-10, XP002706380, Retrieved from the Internet: URL:http://www.ci-plus.com/data/ci-plus_sp ecification_v1.3.pdf [retrieved on 2013-07-26]

## Description

### BACKGROUND

### Field of the Disclosure

This disclosure relates to receiving audio and/or video content.

### Description of the Related Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present disclosure.

As background technology, the DVB Common Interface ("CI") specification allowed a television receiver or set top box (a "host") to interact with a secure hardware module (a conditional access module or "CAM") to allow the host to decrypt access-controlled audio/video (audio, video or audio and video) content. The CI specification defines an interface between the host and the CAM, so that the two will work together if both conform to the CI specification. This interoperability provided a significant benefit of the CI system, as, in principle, it allowed consumers a choice of compatible products from different manufacturers.

In the CI specification the CAM interacts with a smart card and/or a user's personal identification number ("PIN") to provide user authentication (although in some examples a smart card is not required).

However, a disadvantage of the original CI specification is that it gave the potential for the decrypted digital content to be copied. This problem arises from the way in which the host and CAM interact. In use, the host sends encrypted data to the CAM. The CAM checks the user authentication and, assuming that the user is authenticated, it decrypts the access-controlled content. The CAM then sends the decrypted content back to the host over the CAM-host interface, which is generally a PCMCIA (Personal Computer Memory Card International Association) interface, though it is not limited to this interface - for example, a USB interface could be used. This connection from the CAM to the host represents a security weakness, in that the decrypted digital content can in principle be intercepted and unlawfully copied. This security weakness meant that some content providers preferred integrated devices, which have the host and CAM as a single unit, because this allowed them better security over the transfer of unencrypted data from the CAM to the host. However, this of course acted against the advantage associated with CI, relating to the potential interoperability of different CAMs and hosts.

The CI Plus specification was drafted to address these problems, by two main routes. CI Plus provides a secure interface between the CAM and the host, so that decrypted content data is not sent in clear form between the two devices. Also, CI Plus provides for the authentication of both the host and the CAM, rather than the CI technique of authenticating only the CAM.

The authentication system uses certificate hierarchy so that the host and the CAM must both have been issued certificates by an authority (such as CI Plus LLP).

The PCMCIA interface between a host and a CAM is protected by encrypting the decrypted content data before it is sent from the CAM to the host, and then decrypting it at the host. This encryption is separate to the access control encryption-decryption established by the content provider, and is specific to each particular CAM-host pair. Keys are exchanged between the CAM and host by the Diffie-Hellman key exchange technique. The keys are also cycled from time to time, so that even if a key was compromised, it would in any event be changed a few seconds later.

Digital Rights Management technologies attempt to control access to copyrighted content and prevent unauthorised copying and distribution of digital content. In order to protect content and inhibit unauthorised content access, DVB systems distribute conditional-access audio and/or video content in an encrypted form. The encrypted content can only be decrypted by a device of a subscribing user if the user's device has the correct decryption key. However, the DVB system is open to manipulation as a subscribing user can copy the decrypted content and freely distribute the content without conditional-access encryption.

The DVB CI Plus specification attempts to prevent the illegal copying and redistribution of content by ensuring that decrypted content is not sent in clear form between the CAM and the host. Although CI Plus can prevent content from being intercepted and copied between the CAM and host, there is no mechanism for identifying a user that illegally copies content, and manipulation of the system is conceivable. For example, CI Plus cannot prevent a user from copying the content by recording the displayed content using a video recording device.

Forensic marking of content provides a means by which content providers can trace copyrighted audio and/or video content. Distributed content can be forensically marked, such that each content recipient has a version of the content with a unique forensic marking. Therefore, forensic marking can deter recipient users from copying their own content and illegally distributing copied content, because the copied content can be traced back to the original recipient via the unique forensic marking. Previously proposed arrangements are disclosed by US 2002/021805 A1, U S2015/021805 A1, and EP 2 802 152 A1.

### SUMMARY

This disclosure provides an arrangement as defined in claim 1.

Various further respective aspects and features of the present disclosure are defined in the appended claims. It is to be understood that both the foregoing general description and the following detailed description are exemplary, but are not restrictive, of the present technology.

### BRIEF DESCRIPTION OF THE DRAWINGS

A more complete appreciation of the disclosure any many of the attendant advantages thereof will be readily obtained as the same becomes better understood by reference to the following detailed description of exemplary embodiments when considered in connection with accompanying drawings, wherein:
Figure 1 is a schematic diagram of a host device with a CAM and a smart card;
Figure 2 is a schematic diagram of a conditional access (CA) system incorporating the host device of Figure 1;
Figure 3 is a schematic diagram illustrating the operation of a CA system according to an embodiment of the present disclosure;
Figure 4 schematically illustrates the operation of a CA system according to an embodiment of the present disclosure;
Figure 5 is a schematic diagram illustrating communication of access-controlled content to a CAM for CA decryption;
Figure 6 is a schematic diagram illustrating secure communication of non-access-controlled content to a host device;
Figure 7 is a schematic diagram illustrating secure communication of decoded non-access-controlled content to a CAM for generating marked content;
Figure 8 is a schematic diagram illustrating secure communication of marked content to a host device;
Figure 9 schematically illustrates an operation of a CAM in response to a received control message;
Figure 10 schematically illustrates an operation of a host device in response to a request from a CAM for content;
Figure 11 schematically illustrates an operation of a CAM and a host in response to a control message;
Figure 12 schematically illustrates the use of encryption keys for communication of non-access-controlled content via an encrypted transport stream link between a host device and a CAM;
Figure 13 schematically illustrates the processing of decoded non-access-controlled to apply an identification and generate marked content;
Figure 14 is a schematic diagram illustrating the operation of a CA system according to an embodiment of the present disclosure;
Figure 15a is a schematic diagram illustrating the operation of a host device according to an embodiment of the present disclosure;
Figures 15b and 15c are schematic flowcharts illustrating aspects of the operation of a content source and a content receiver respectively;
Figure 16 is a schematic timing diagram illustrating a content source that sequentially communicates segments of encoded content to a receiver; and
Figures 17 to 19 are schematic flowcharts illustrating respective methods.

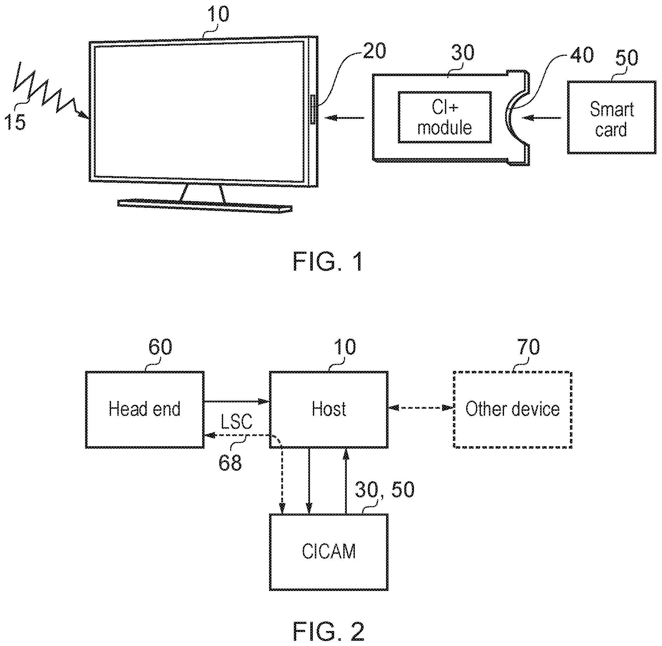

To establish the technical context of the present embodiments, a broadcast system having a tuner and decrypter arrangement will first be described with reference to Figures 1 to 3.

Referring now to Figure 1, a host device 10 is shown here as a television set but could be, for example, a set top box (noting that the expression "set top" does not imply, to the skilled person, any requirement for a particular physical position of the device in use). The host device 10 receives an access-controlled television signal 15 via a broadcast data path. This could be, for example, a satellite television signal received by a satellite dish (not shown), a terrestrial television signal, a cable television signal or the like, although other types of television signal include a television signal broadcast or transmitted by an internet protocol (IP) packet signal. One technique is to encode an MPEG transport stream (TS) into IP packets so that an IP packet carries a number (for example 7 or 8) TS packets. Another technique encodes the television signal as a so-called ISO (International Standards Organisation) BMFF (Base Media File Format) arrangement described in the reference:
http://en.wikipedia.org/wiki/ISO_base_media_file_format. In such arrangements the IP interface at a host device is generally considered within the art as a "tuner" even though it may have no radio frequency circuitry or functionality. It does however act in a similar way to a radio frequency tuner in that it selects an IP stream from a multitude of possible IP streams. To encompass these various types of functionality, in the present description a "tuner" (in the context of radio frequency reception, IP packet selection or other similar function) will be referred to as a "selector" in the discussion below. The selector may also provide buffering of the received packet stream.

The host device 10 has a PCMCIA slot 20 which includes electrical connections and a physical space for a plug-in module, both according to the PCMCIA standard. In other embodiments, a universal serial bus (USB) or other electrical interface can be used instead of the PCMCIA interface.

A CI Plus conditional access module, referred to as a CICAM 30, is a PCMCIA module which can be plugged into the PCMCIA slot 20. When the CICAM 30 is fully plugged into the slot 20, electrical connections are made between connectors on the CICAM 30 and cooperating connectors within the slot 20.

The CICAM itself may be a cardless module or may have a slot 40 into which a so-called smart card 50 may be inserted. The smart card is removable and carries information defining a current user of the content receiver in a tamper-proof, secure and non-volatile form. When the smart card is fully inserted in the slot 40, a data connection is formed between the smart card 50 and the CICAM 30, either by using cooperating electrical connectors on the smart card 50 and within the slot 40, or by using a known contactless connection technique in which data is transferred wirelessly over a very short range such as 1-2 cm.

Accordingly the host device and the CICAM cooperate to provide an audio/video content receiver being configured to receive media content from a content source by a broadcast data path, the media content being arranged as a plurality of media channels, the content receiver comprising: a host module (such as the host device 10) having a selector to allow selection, at the host module, of one or more of the media channels for reproduction; and a removable or optionally removable conditional access module (CAM) (such as the CICAM 30), the CAM having an access control unit for decrypting access-controlled encrypted broadcast content, the host module and the removable or optionally removable CAM being arranged to provide an encrypted communication link for decrypted access-controlled encrypted broadcast content between the conditional access module and the host module.

Figure 2 schematically illustrates the host device 10 in the context of a conditional access system.

A so-called head end 60 represents the source of the access-controlled television signal 15. The head end may represent, for example, an uplink station of a satellite broadcaster or a signal distribution centre of a terrestrial, cable or internet broadcaster. The conditional access (CA) system scrambles content at the head end using a CA system encryption. The head end can also introduce other CA-related information into the encrypted data stream which enables the CICAM to descramble the content and to manage the subscriber's (user's) access and entitlements.

The head end 60 sends the television signal 15 to the host 10 which in turn passes the signal to the CICAM 30 for decryption of the access control encryption. The CICAM 30 then re-encrypts the signal using a local ("CC" or content control) encryption and sends the re-encrypted signal back to the host 10 via the PCMCIA connection. The host decrypts the signal received from the CICAM 30 for display on a display screen or for supply to another device 70 such as a hard disk based video recorder.

A data link 68, called a Low Speed Communications (LSC) link, provides data communications between the head end and the CICAM, via the host's IP (Internet Protocol) port - or in other words the internet connection of the host. The LSC link may therefore be provided by, for example, an encrypted internet data link between the host and the head end. The term "Low Speed" refers in a general sense to a comparison between the speed of the LSC and the data rate of the broadcast data path, which would (in the case of a satellite or terrestrial data path) generally be much higher. But no absolute value of speed or data rate is implied. In this way, the CAM and the content source are configured to establish a secure communications link via an internet data connection.

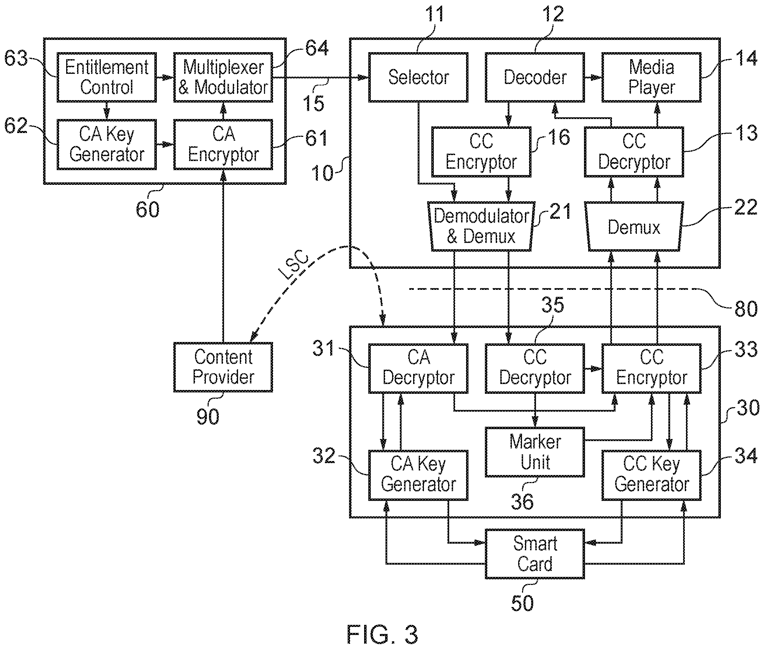

The detailed operation of the system of Figure 2 is described in the CI Plus Specification 1.4.2 (2016-05), available (at the time of filing) at http://www.ci-plus.com/data/ciplus_specification_v1.4.2.pdf. Figure 3 shows the head end 60 (which receives a content signal from a content provider 90), the host device 10, the CICAM 30 and the smart card 50 in more detail. The signal 15 is shown passing from the head end 60 to the host device 10. The secure interface 80 between the host device 10 and the CICAM 30 is referred to as the common interface. Aspects of Figure 3 will be discussed in detail below.

### Conditional Access

Known CA systems provide techniques by which a user can be denied or allowed access to a digital television stream. Access is provided only to those subscribers or users with valid payment accounts. In practical terms, a user is provided with a smart card 50 identifying that user in (ideally) a tamper-free way, and the system is set up so that only users with valid smart cards are able to obtain access to the access-controlled content.

Access control is provided by the use of scrambling and encryption. The content signal is scrambled with an 8-byte control word, which is changed frequently (up to several times per minute) to avoid the CA system being compromised by outside knowledge of the control word. The control words are transmitted to the receiver's CICAM, for descrambling of the scrambled content, in an encrypted form as an entitlement control message (ECM). The CICAM decrypts the control word to allow descrambling of the access-controlled content only when it is authorised to do so by receipt of an entitlement management message (EMM). EMMs are specific to each user or group of users; the CICAM confirms the rights which an EMM provides by comparing the user identification provided in the EMM with user information provided in the smart card 50. The EMMs can be sent less frequently than the ECMs, with intervals between successive EMMs in current commercial systems varying between 12 minutes and six weeks.

ECMs and EMMs themselves are examples of control messages and are well known message types in MPEG television distribution systems. The format of their payloads can be specific to the CA system in use, with the differences between formats often being semantic rather than having technical significance.

### Head End

The head end 60 comprises a CA encryptor 61, a key generator 62, an entitlement control unit 63 and a multiplexer and modulator 64.

The content provider 90 supplies content (such as television signals) to the head end 60. The head end 60 applies conditional access (CA) scrambling and encryption to the content.

More specifically, the CA encryptor 61 encrypts or scrambles the content using a CA key as a control word. The CA key is generated by the CA key generator 62. The scrambled content generated by the CA encryptor is supplied to the multiplexer and modulator 64.

The CA key is also provided to the entitlement control unit 63, which generates ECMs based on the CA keys and EMMs based on subscriber data defining which subscribers are entitled to descramble which content streams. The ECMs and EMMs are supplied to the multiplexer and modulator 64. One or more scrambled content streams from the CA encryptor 61, one or more unscrambled (open access or "free to air") content streams and the entitlement control messages are multiplexed together to form a transport stream such as an MPEG2 transport stream. Known formats are used to carry the content data, the ECMs and the EMMs. The ECMs, EMMs and data defining the type of scrambling used on each elementary stream (corresponding to individual scrambled content streams) are provided in a known format and are referenced using known techniques in a programme map table (PMT) and/or in a conditional access table (CAT) which has a predetermined programme identifier (PID) of 0x001, so that the CAT can be recognised at the CICAM.

The multiplexed transport stream is then modulated by the multiplexer and modulator 64 for transmission as a cable, satellite or terrestrial broadcast signal 15.

### Host Device

The host device 10 comprises a selector 11, a decoder 12, a media player 14, a CC (content control) decryptor 13, a CC encryptor 16, a demodulator and demultiplexer ("demodulator and demux") 21 and a demultiplexer ("demux") 22. Note that the host device may have other additional functions; for example, a host device may provide two or more of satellite broadcast reception, cable broadcast reception, terrestrial broadcast reception and network (IPTV) television reception. Accordingly, the content source may be configured to send data to the host module as one or more of: internet protocol (IP) data, satellite broadcast data, terrestrial television broadcast data and cable broadcast data. Depending on the type of broadcast signal 15, the selector 11 acts to transform the received signal back to baseband, so that a single elementary content stream and associated CAT data can be selected from the received signal using a demodulator and demultiplexer 21. The content stream and ECM / EMM data are passed via the common interface 80 to the CICAM 30.

In the case of access-controlled content data, at this stage the content data is still scrambled as it is passed via the common interface 80 to the CICAM 30. This part of the transmission over the common interface 80 is therefore secure by virtue of the CA encryption.

Assuming the ECM and EMM allow it, the CICAM 30 descrambles the content data and re-encrypts it using CC encryption. The way in which this is done will be described below. The CC encrypted data is returned to the host device 10 where it is demultiplexed by the demux 22 and decrypted by the CC decryptor 13, so that it can be displayed or passed to another device 70 as clear content.

The host device therefore operates to receive audio/video content and has a content decryptor (the CAM module for example) capable of decrypting an audio/video programme from a packetized data stream (such as a TS) by using data packets (such as EMM/ECM) defining decryption information. The received TS may comprise one or more programmes having data packets identified by respective sets of packet identifiers (such as PIDs) and comprising identification data (PAT, PMT, CAT and the like) mapping programmes to respective sets of the PIDs.

The host device is also configured to acquire channel association data via the broadcast data path, or in other words, to receive a broadcast NIT. This feature will be described further below.

This provides an example of a host module for use in an audio and/or video content receiver configured to receive audio and/or video access-controlled content from a content source and connectable to a CAM having an access control unit for processing access-controlled content to generate non-access-controlled content, the host module being arranged to communicate non-access-controlled content between the CAM and the host module via an encrypted transport stream link; and the host module being configured to communicate, via the encrypted transport stream link, at least some of the non-access-controlled content to the CAM for processing by an identification data module and to receive, from the CAM, marked content via the encrypted transport stream link.

The host device 10 receives access-controlled content from the content source that is encoded content. The encoded content may comprise compression-encoded content, and decoded content may comprise decompressed content. The selector 11 of the host device passes the non-access-controlled content to the demodulator and demultiplexer 21 and communicates encoded access-controlled content to the CAM via the encrypted transport stream link,. The CAM communicates encoded non-access-controlled content to the host via the encrypted transport stream link using CC encryption.

The host device 10 comprises a decoder 12 that decodes encoded non-access-controlled content. The host device is configured to receive a request from the CAM for decoded non-access-controlled content to be processed by the identification data module of the CAM. In dependence upon whether or not a request is received, decoded non-access-controlled content is passed from the decoder 12 to either the media player 14 or the CC encryptor 16. Decoded non-access-controlled content to be displayed or passed to another device 70 without being processed by the identification data module of the CAM is passed from the decoder 12 to the media player 14. Alternatively, decoded non-access-controlled content that is requested by the CAM for processing is passed from the decoder 12 to the CC encryptor 16 and communicated to the CAM via the encrypted transport stream link. The CAM processes decoded non-access-controlled content to generate marked content, and the CAM communicates decoded non-access-controlled marked content to the host device via the encrypted transport stream link. The host device receives decoded non-access-controlled marked content at the CC decryptor 13 and passes the decoded non-access-controlled marked content to the media player 14 so that marked content can be displayed or passed to another device 70.

The decoder 12 of the host device is configured to pass decoded non-access-controlled content to either the media player 14 or the CC encryptor 16 in dependence upon a request received from the CAM for decoded non-access-controlled content. Upon receiving a request from the CAM for decoded non-access-controlled content, the host communicates decoded non-access-controlled content to the CAM, and the provision of decoded non-access-controlled content to the media player 14 is inhibited.

The host module 10 may comprise circuitry (such as a controller 17 to be described below) to inhibit the provision, other than to the CAM, of the decoded non-access-controlled content provided by the host module to the CAM for processing by the identification data module.

### CICAM

The CICAM 30 may be a CAM according to the Common Interface plus standard and comprises a CA decryptor 31, a CA key generator 32, a CC encryptor 33, a CC key generator 34, a CC decryptor 35 and a marker unit 36.

The CA decryptor 31 and the CA key generator 32 may be considered as an access control unit for decrypting access-controlled broadcast content or other data. The CC key generator 34 and the CC encryptor 33 of the CICAM 30, and the demultiplexer ("demux") 22 and the CC decryptor 13 of the host device 10 cooperate to provide an encrypted communication link (the common interface 80) for non-access-controlled encrypted broadcast content, between the CICAM and the host device.

The CA decryptor 31 uses keys generated from received ECMs and EMMs by the CA key generator 32, using checks of the user's identity from the smart card 50, to descramble the received access-controlled content. This part of the operation of the CICAM uses known CA techniques to retrieve and apply the CA keys.

Clear content data is passed from the CA decryptor 31 to the CC encryptor 33. However, as this data transfer is entirely internal to the CICAM, it can be rendered secure and tamper proof by known techniques such as by providing the CA decryptor 31, the CC encryptor 33 and the clear content interface within a single integrated circuit device.

The CC encryptor 33 encrypts the descrambled content using a CC key supplied by the CC key generator 34. This key is established by a secure interchange between the CICAM 30 and the host device 10, and is specific to that CICAM-host device pair. The CC-encrypted content is passed over the common interface 80 to the host device 10. Therefore, this part of the common interface is also secure, as the content data is CC-encrypted as it passes to the host device.

Accordingly, the host module and the CAM may be arranged to provide an encrypted communication link for non-access-controlled encrypted broadcast content between the conditional access module and the host module.

This provides an example of a CAM for use in an audio and/or video content receiver configured to receive audio and/or video access-controlled content from a content source and having a host module, the CAM comprising: an access control unit for processing access-controlled content to generate non-access-controlled content; and an identification data module to apply identification data to audio and/or video content to generate marked audio and/or video content; in which: the CAM is arranged to communicate non-access-controlled content to the host module via an encrypted transport stream link; the CAM is configured to receive, via the encrypted transport stream link, at least some of the non-access-controlled content from the host module to the CAM for processing by the identification data module; and the CAM is configured to communicate, via the encrypted transport stream link, marked audio and/or video content to the host module.

### Key Exchange

The CICAM 30 and the host device 10 both contain logic, firmware or software providing algorithms for Diffie-Hellman (DH) secure key exchange, hashing and encryption using the known algorithms SHA-256, DES and AES, respective certificates issued by a certifying authority such as CI Plus LLP, and private keys with the corresponding public keys.

When the CICAM 30 is first associated with the host device 10, the CICAM 30 initiates an authentication process with the host device 10. In this process, each device verifies the other's certificate, and the DH key exchange process takes place so as to securely share keys between the two devices. In particular, the CICAM first requests that the host device provides its certificate data. The CICAM verifies the signature on the host device's certificate. The same process is then carried out by the host requesting and verifying the CICAM's certificate. The CICAM and the host then each demonstrate that they possess the private key corresponding to the public key in the certificate by signing a DH public key and sending it to the other device for validation. The CICAM then obtains and verifies an authentication key AKH from the host. The CICAM and host start to compute and exchange key data for the encryption and authentication of data sent over the common interface 80. In this way, the key, key pair or other key information established by the CICAM and the host for communication over the common interface 80 is specific to that CICAM-host pair.

After authentication, the CICAM also starts to compute the CC key. The CICAM can also instruct the host device to compute the CC key. The CC key is then used as described above to encrypt content data passed from the CICAM 30 to the host device 10, according to the AES algorithm. Therefore, it will be understood that the keys used for the secure common interface 80 are specific to a particular CICAM-host pair.

The CICAM 30 and the host device 10 establish private CC keys used for encryption and decryption of content so that non-access-controlled content can be securely communicated between the CICAM and host device. When communicating non-access-controlled content from the CICAM to the host device, the CC encryptor 33 of the CICAM and the CC decryptor 13 of the host device use a first set of CC keys to encrypt and decrypt non-access-controlled content. However, non-access-controlled content that is processed by the marker unit 36 will undergo two passes of the transport stream link represented by the CC encryptor 33 of the CICAM. For the second pass, the CICAM and host may establish a second set of private CC keys different to the first set of CC keys. In some examples, the CAM and the host generate or otherwise agree or exchange a key precursor (Kp). Kp is used as an input to the CIPlus cipher to create a CC key. For the encrypted channel to carry the marked content, the Kp and LTS_ID are used as inputs to a CIP cipher so that, for example, CCKey(Kp, LTS_id=0x47) != CCKey(Kp, LTS_id=0x48). Therefore, the CICAM and host can be configured to communicate non-access-controlled content using a first set of keys, and a second set of keys can be used to communicate non-access-controlled marked content from the CICAM to the host device.

The host device of Figure 3 can operate under the control of a central processing unit which in turn may be a programmable processor device operating according to software or firmware stored in a memory (which may in turn be a non-transitory machine-readable memory such as a magnetic or optical disk store or a non-volatile semiconductor memory).

### Digital Watermarking

A digital watermark can be applied to audio and/or video content to identify the source of the content and protect the copyright interests of the content owner. Audio and/or video content may be marked in this way so that each copy has its own unique watermark, being unique in the sense that it can distinguish each copy of the content from other copies of the same content having instances of that type of watermark (which is to say, not necessarily unique in any absolute sense). Each copy of the content can be traced using the unique digital watermark and the source of unauthorised copied content can be identified. In some examples, one or more watermarks may be applied to the content at different stages in the distribution process and the history of copied content can be traced.

A digital watermark is applied to audio and/or video content by inserting machine-readable code that modifies the original content. Many techniques have been previously proposed and one or more of such techniques may be used here. In this way, the watermark travels with the content in the case of copying of the content. In some example arrangements, the watermark can be persistent in the sense that the watermark will be audibly, visually or machine-detectable even if the content has been through subsequent processing such as compression / decompression, upscaling, downscaling, cropping or even in some instances capture and re-recording of the content by a camera and microphone.

In some examples, a digital watermark comprises or represents a pattern of bits inserted into the original content. The modification of the content due to watermarking may be perceptible or imperceptible to a viewer or listener. Displaying a broadcaster's logo is an example of a perceptible watermark that may be applied to content to indicate ownership of the content. In some examples, a watermark that is imperceptible or substantially imperceptible to human senses may be applied so that the original content and watermarked content are visually and audibly indistinguishable from each other. A visually imperceptible watermark can be applied to video content, such that the watermark cannot be identified by the human eye. An audibly indistinguishable watermark can be applied to audio content so that the watermark cannot be discerned by the human auditory system. A digital watermark can be applied to audio/video content using an algorithm programmed with an insertion key. In order to identify an imperceptible watermark, a detection algorithm can be used with an extraction key (related to the insertion key) to extract the watermark from the content. Systems are currently available which can provide a digital watermark having an insertion technique designed to withstand attempts to remove or change the watermark and in some cases to survive routine transformations, such as compression and filtering.

In examples of the present techniques, a perceptible and/or imperceptible digital watermark can be applied to audio and/or video content to generate marked audio and/or video content. In some examples, such a digital watermark may be a unique identification that is specific to one or more of the following: the CAM; a certificate associated with the CA decryptor of the CAM; the host module; and the user of the CAM. Applying a unique watermark can allow illegally copied content to be traced to the equipment at which the watermark was applied.

A digital watermark can therefore be applied to video and/or audio content to generate marked content. In the present examples, the process of applying a digital watermark, referred to as marking, is performed by the identification data module, referred to as the marker unit 36, of the CICAM 30.

In the case of at least some of the audio/video content requiring marking, non-access-controlled audio/video content (that is to say, content which has been received by the host device, transferred to the CICAM for CA decryption, and returned to the host device) can be communicated by the host device to the CICAM 30 and marked by the marker unit 36.

The host device 10 decodes encoded non-access-controlled content and encrypts the decoded non-access-controlled content at the CC encryptor 16 so that it can be securely communicated to the CICAM via the encrypted transport stream link. The CC decryptor 35 decrypts the communicated content, and the decoded non-access-controlled content is passed to the marker unit 36 for marking. The marked content is encrypted by the CC encryptor 33 and communicated via the encrypted transport stream link to the CC decryptor 13 of the host device. The host device decrypts the marked content received from the CICAM 30 and provides the content to the media player 14 for display on a display screen or for supply to another device 70 such as a hard disk based video recorder.

The host module 10 and the CAM 30 therefore provide an example of an audio and/or video content receiver configured to receive audio and/or video access-controlled content from a content source 60, 90, the content receiver comprising:
a host module 10;
a conditional access module (CAM) (for example 30, cooperating with 50), having an access control unit (for example 31) for processing access-controlled content to generate non-access-controlled content, the host module and the CAM being arranged to provide an encrypted transport stream link (for example 16, 21, 35, 33, 22, 13) for communication of the non-access-controlled content between the CAM and the host module;
in which:
   the CAM comprises an identification data module (for example 36) configured to apply identification data to audio and/or video content to generate marked audio and/or video content;
   the host module is configured to communicate, via the encrypted transport stream link, at least some of the non-access-controlled content to the CAM for application of identification data by the identification data module; and
   the CAM is configured to communicate marked audio and/or video content to the host module via the encrypted transport stream link.

The host module 10 provides an example of host module for use in an audio and/or video content receiver configured to receive audio and/or video access-controlled content from a content source and connectable to a conditional access module (CAM) (for example 30, cooperating with 50) having an access control unit (for example 31) for processing access-controlled content to generate non-access-controlled content, the CAM comprising an identification data module (for example 36) to apply identification data to audio and/or video content to generate marked audio and/or video content;
the host module being arranged to communicate non-access-controlled content between the CAM and the host module via an encrypted transport stream link (for example 16, 21, 35, 33, 22, 13); and
the host module being configured to communicate, via the encrypted transport stream link, at least some of the non-access-controlled content to the CAM for processing by the identification data module and to receive, from the CAM, marked content via the encrypted transport stream link.

The CAM 30, cooperating with the smart card 50, provides an example of a conditional access module (CAM) for use in an audio and/or video content receiver configured to receive audio and/or video access-controlled content from a content source (for example 60) and having a host module (for example 10), the CAM comprising:
an access control unit (for example 31) for processing access-controlled content to generate non-access-controlled content; and
an identification data module (for example 36) to apply identification data to audio and/or video content to generate marked audio and/or video content;
in which:
   the CAM is arranged to communicate non-access-controlled content to the host module via an encrypted transport stream link (for example 16, 21, 35, 33, 22, 13);
   the CAM is configured to receive, via the encrypted transport stream link, at least some of the non-access-controlled content from the host module to the CAM for processing by the identification data module; and
   the CAM is configured to communicate, via the encrypted transport stream link, marked audio and/or video content to the host module.

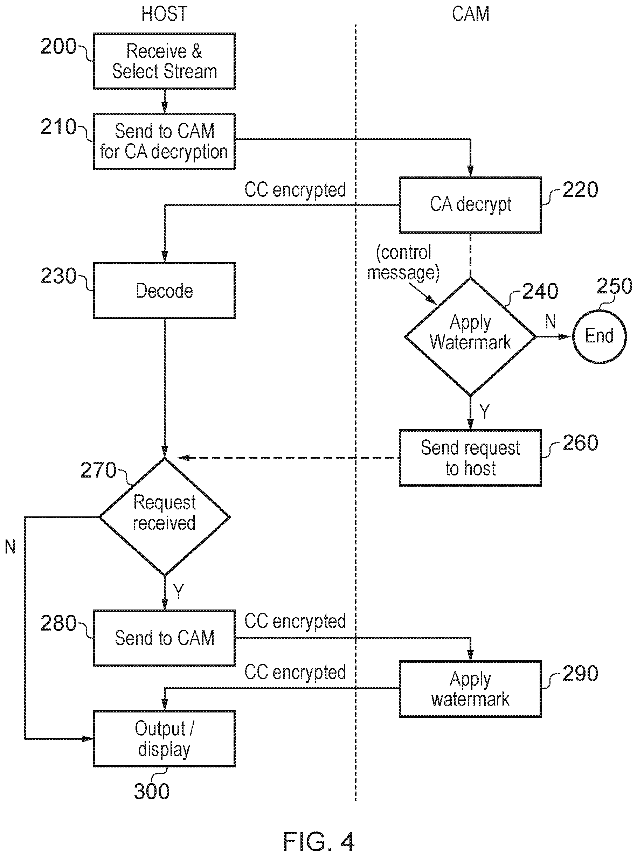

Aspects of the operation of the CA system described above will now be discussed with reference to Figure 4, in which processing operations carried out by the host device are represented as a left-hand column as drawn, and processing operations carried out by the CICAM are represented as a right-hand column as drawn.

The host device is configured to receive audio and/or video access-controlled content from a content source and select a stream (at a step 200) that is communicated from the host to the CICAM (at a step 210). At a step 220 the CICAM CA decrypts the access-controlled content and communicates the resultant non-access controlled content to the host device via the encrypted transport stream link. By way of example, in the case of standard broadcast the TS packets are CC encrypted by the CAM. In the case of media files e.g. ISOBMFF, the media files are encapsulated in the TS packets and then the TS packets are encrypted. So the encryption is applied to the transport stream packets. However, the non-access-controlled content could be provided via the encrypted transport stream link in another form, for example a non-packetized form or in packets of different formats, lengths or the like.

At a step 230 the non-access-controlled content is decoded at the host device.

The CICAM is configured to receive at a step 240 a control message (for example, as an ECM and/or EMM) from the head end 60 that indicates whether some or all of the access-controlled content should be processed to apply a watermark (240). When the control message indicates that a watermark should not be applied, or when no such control message is received, then control passes directly to a step 250 (at which the process ends as far as the CICAM is concerned). However, when the control message indicates that a watermark should be applied to the content, control passes to a step 260 at which the CICAM sends a request to the host device, to request the relevant decoded non-access-controlled content (230) from the host.

Note that content is not decrypted and marked (in the unencrypted uncompressed domain) within the CAM. This would be undesirable because of the need to provide a decoder (or more than one decoder) as part of the CAM. There are also technical obstacles to providing the marking at the host, as a host would potentially have to implement many different marking blocks to provide alternative marking technologies.

At a step 270, the host device detects whether a request has been received. If a request has been received, then in accordance with the received request, the host communicates the relevant (requested) decoded non-access-controlled content to the CICAM via the encrypted transport stream link at a step 280 and, at a step 290, the CICAM applies a watermark to the content to generate marked content. The marked content is communicated to the host device to be output or displayed at a step 300.

Alternatively, if the host has not (at the step 270) received a request from the CICAM for decoded non-access-controlled content, the decoded content is not communicated back to the CICAM and is instead passed for output or display by the host device with no watermarking applied.

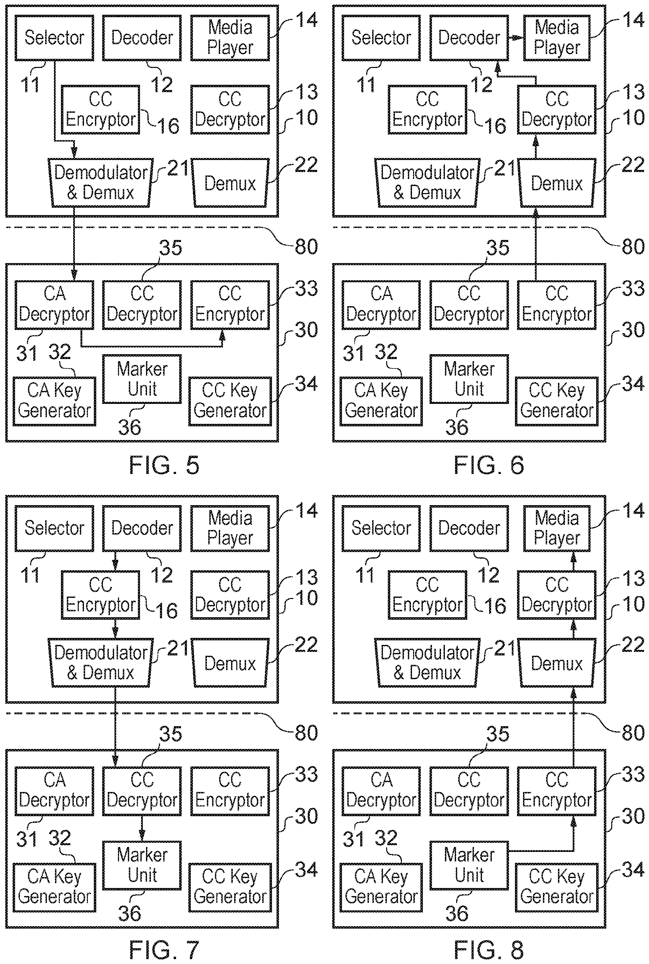

Figures 5 to 8 schematically illustrate the operation of the system of Figure 3 according to the flowchart of Figure 4. In particular, Figure 5 and Figure 6 illustrate the operation of the CA system for all access-controlled content, whilst Figure 7 and Figure 8 illustrate operations for generating marked content for at least some of the access-controlled content.

Figure 5 schematically illustrates the host device 10 communicating access-controlled content to the CICAM 30 for CA decryption in order to generate non-access-controlled content. The access-controlled content is firstly passed from the selector 11 to the demodulator and demultiplexer 21 of the host device and communicated via the transport stream link to the CA decryptor 31 of the CICAM 30. The CA decryptor 31 decrypts the access-controlled content using a CA key generated by the CA key generator 32, and non-access-controlled content is passed to the CC encryptor 33 for encryption using the CC key generated by the CC key generator 34. Figure 5 therefore illustrates an example of processing operations by which the CA system generates non-access-controlled content and CC encrypts the non-access-controlled content so that non-access-controlled encrypted content can be securely communicated to the host. In some examples, the CC key generated by the CC key generator 34 for encrypting the non-access-controlled-content is referred to as CCK_LTS_ID(1).

Figure 6 schematically illustrates the CICAM 30 communicating the non-access-controlled encrypted content to the host 10 via the encrypted transport stream link. The non-access-controlled encrypted content is demultiplexed by the demultiplexer 22, decrypted by the CC decryptor 13 and the non-access-controlled content is passed to the decoder 12. In the case that no request is received from the CICAM (for content to be marked), the decoder 12 decodes the encoded non-access-controlled content, which is passed to the media player 14 so that it can be displayed or passed to another device 70 as clear content.

However, if at least some of the access-controlled content requires a watermark (as indicated by a control message sent to the CICAM 30 by the head end 60), the CICAM 30 requests the host 10 to communicate the at least some of the decoded non-access-controlled content to the CICAM 30 for further processing to generate marked content. Figure 7 and Figure 8 illustrate the further processing that the at least some of the decoded non-access-controlled content is subjected to in order to generate and display marked content. Figure 7 schematically illustrates the operation of the CA system for generating marked content and Figure 8 schematically illustrates the operation of the CA system for communicating marked content to the host 10 for display and output.

In particular, Figure 7 illustrates decoded non-access-controlled content that is passed to the CC encryptor 16 for encryption, demultiplexed by the demodulator and demultiplexer 21 and communicated to the CICAM 30 via the encrypted transport stream link. The CC decryptor 35 decrypts the decoded non-access-controlled content, which is passed to the marker unit 36 where a digital watermark is applied to the decoded non-access-controlled content in order to generate marked content. In some examples, the CC key used by the CC encryptor 16 for encrypting the decoded non-access-controlled content is referred to as either CCK_LTS_ID(1) or CCK_LTS_ID(2). The CC key used by the CC encryptor 16 for encrypting the decoded non-access-controlled content may or may not be the same as the CC key used by the CC encryptor 33 for encrypting the encoded non-access-controlled content in Figure 5.

Figure 8 illustrates marked content that is CC encrypted by the CC encryptor 33 using the CC key generated by the CC key generator 34. The marked content is communicated to the host module 10 via the encrypted transport stream link. At the host module 10, the demultiplexer 22 demultiplexes content and the CC decryptor 13 decrypts the marked CC encrypted content and provides the marked content to the media player 14 for display on a display screen or for supply to another device 70 such as a hard disk based video recorder. In some examples, the CC key used by the CC encryptor 33 for encrypting the decoded non-access-controlled marked content is referred to as CCK_LTS_ID(2).

This provides an example of an audio and/or video content receiver configured to receive audio and/or video access-controlled content from a content source, the content receiver comprising: a host module; a conditional access module (CAM) having an access control unit for processing access-controlled content to generate non-access-controlled content, the host module and the CAM being arranged to provide an encrypted transport stream link for communication of the non-access-controlled content between the CAM and the host module; in which: the CAM comprises an identification data module configured to apply identification data to audio and/or video content to generate marked audio and/or video content; the host module is configured to communicate, via the encrypted transport stream link, at least some of the non-access-controlled content to the CAM for application of identification data by the identification data module; and the CAM is configured to communicate marked audio and/or video content to the host module via the encrypted transport stream link.

The CAM is configured to receive control messages such as EMMs and/or ECMs indicating whether a given content should be processed by the marker unit 36 to generate marked content. When it is indicated that the given content should be processed by the marker unit 36 to generate marked content, the CAM is responsive to that indication to request the given content from the host for processing by the marker unit 36 to generate marked content.

The CAM decides whether a watermark is applied to the content according to the received ECM and/or EMM, and requests content from the host in accordance with the received ECM and/or EMM. In some examples, the CAM is configured to receive such control message such as ECMs and/or EMMs from the content source.

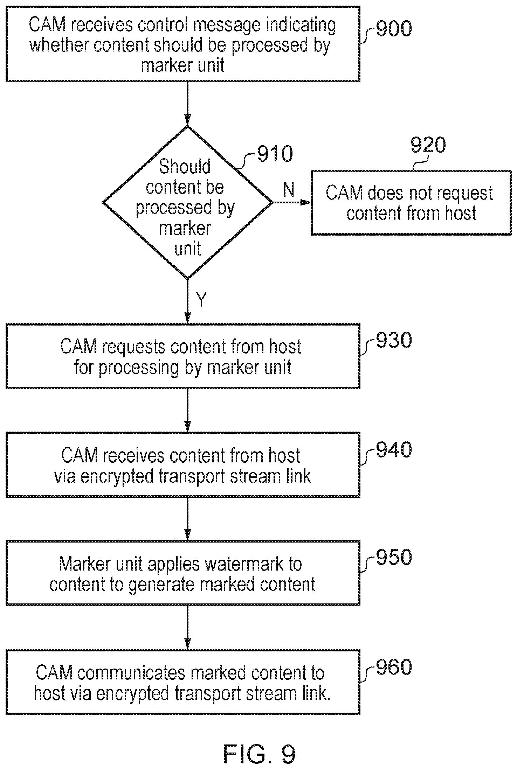

Figure 9 schematically illustrates the operation of a CAM 30 in response to a received control message. The CAM is configured to receive at a step 900 a control message from the head end 60 indicating whether a given content should be processed by the marker unit 36 to generate marked content. At a step 910, the CAM identifies (from the control message) whether the given content should be marked by the marker unit 36. In response to a control message indicating that the given content should be processed by the marker unit 36, the CAM is configured to request (at a step 930) the given non-access-controlled content from the host for processing by the marker unit 36.

The CAM is configured to receive the given non-access-controlled content (step 940) from the host module 10 via the encrypted transport stream link, and the marker unit 36 applies a watermark (step 950) to the given non-access-controlled content to generate marked content. The marked content is subsequently communicated to the host via the encrypted transport stream link at a step 960. Alternatively, the control message received at the step 900 may indicate that the given content should not be processed by the marker unit 36, in which case the CAM does not request the given non-access-controlled content from the host module (step 920).

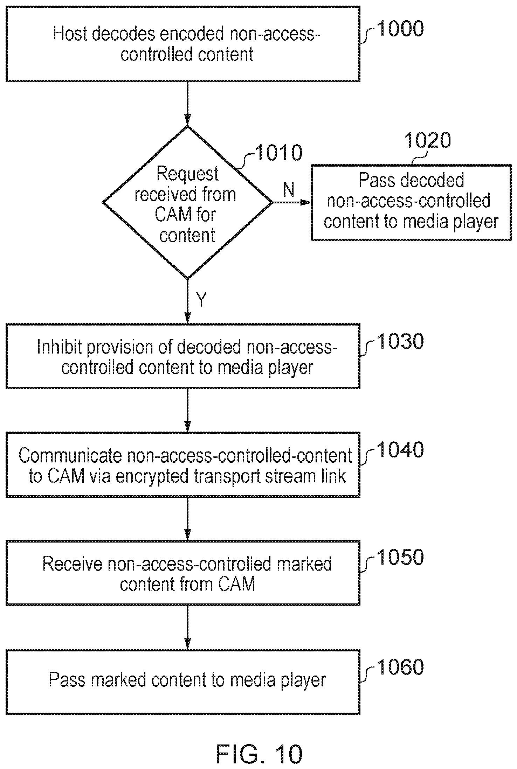

Figure 10 schematically illustrates an operation of a host 10 in response to a request from a CAM 30 for non-access-controlled content. The host comprises a content decoder 12 to decode encoded non-access-controlled content to generate decoded non-access-controlled content. At a step 1000, the host decodes encoded non-access control content. Depending on the operation of the CAM (as described previously in Figure 9), the host may or may not receive a request from the CAM for decoded non-access-controlled content (step 1010). If the host does not receive a request from the CAM for decoded non-access-controlled content, the decoded non-access-controlled content is passed from the decoder 12 to the media player 14 (step 1020) for display on a display screen or for supply to another device 70 such as a hard disk based video recorder. However, if a request is received from the CAM for decoded non-access-controlled content, the control proceeds to a step 1030 at which the provision of decoded non-access-controlled content to the media player is inhibited. The host module comprises circuitry to inhibit the provision, other than to the CAM, of the non-access-controlled content provided by the host module to the CAM for processing by the marker unit 36.

At a step 1040, the host module communicates decoded non-access-controlled content to the CAM via the encrypted transport stream link. The host module receives decoded non-access-controlled marked content from the CAM via the encrypted transport stream link at a step 1050. The decoded non-access-controlled marked content is passed to the media player 14 (step 1060) for display on a display screen or for supply to another device 70.

The control message received by the CAM may indicate that all of the content should be processed by the marker unit 36, in which case the CAM requests all of the non-access-controlled content from the host module for processing by the marker unit 36. The control message may however indicate that some of the content should be processed by the marker unit 36. Accordingly the CAM requests a first subset of non-access-controlled content from the host module for processing by the marker unit 36, and the host module is configured to buffer a second, remaining, subset of non-access-controlled content that is not requested by the CAM for processing by the marker unit 36. The CAM receives the requested first subset of non-access-controlled content from the host, and the host is configured to buffer the second subset of non-access-controlled content to compensate for the time taken for the processing by the marker unit 36 to be performed. In some examples, the content comprises a plurality of content segments, and the first subset of content comprises some but not all of the content segments.

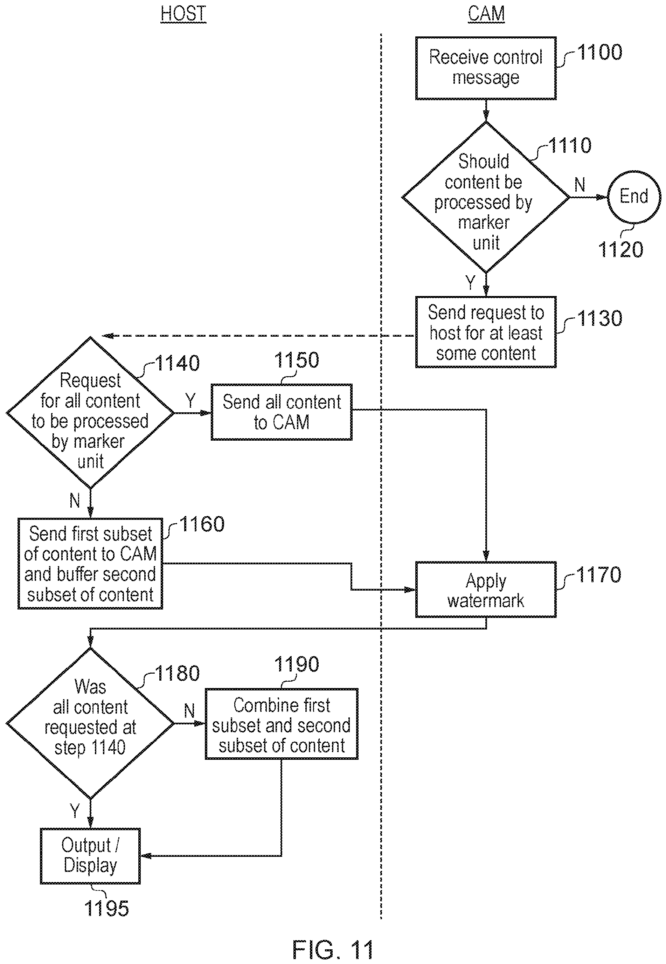

Figure 11 schematically illustrates the operation of a CAM 30 and a host 10 in response to a control message indicating whether content should be processed by the marker unit 36. The CAM is configured to receive a control message indicating whether a given content should be processed by the marker unit. At a step 1100, the CAM receives a control message indicating whether a given content should be processed by the marker unit 36. In response to the control message, the CAM identifies whether the given content should be processed by the marker unit at a step 1110. When the control message indicates that content should be processed by the marker unit, the control passes to a step 1130 at which the CAM sends a request to the host for at least some of the non-access-controlled content. However, when the control message indicates that content should not be processed by the marker unit, the control passes directly to a step 1120 at which the process ends as far as the CAM is concerned, and the host module does not receive a request from the CAM for non-access-controlled content.

At a step 1140, the host receives the request from the CAM for the at least some of the non-access-controlled content to be processed by the marker unit. When the request is for all the non-access-controlled content to be processed by the marker unit, the control passes to a step 1150 at which all the non-access-controlled content is communicated to the CAM via the encrypted transport stream link. If the request at the step 1140 is for a first subset of the non-access-controlled content to be processed by the marker unit, the control passes to a step 1160. At the step 1160 the first subset of non-access-controlled content is communicated to the CAM via the encrypted transport stream link, and a second subset of non-access-controlled content, which is not requested, is buffered by the host.

At a step 1170, the marker unit 36 of the CAM applies a watermark to the received non-access-controlled content and communicates the marked content to the host via the encrypted transport stream link. At a step 1180, the host identifies whether there is a second subset of buffered non-access-controlled content associated with the first subset of content. If there is an associated second subset of buffered content, the host combines the first subset of marked content and the second subset of buffered content (step 1190) and proceeds to a step 1195 at which the content is output or displayed. Alternatively, if the host identifies at the step 1180 that there is no second subset of buffered content (all non-access-controlled content was sent to the CAM at step 1150), then the control proceeds to the step 1195 at which all of the content is output or displayed.

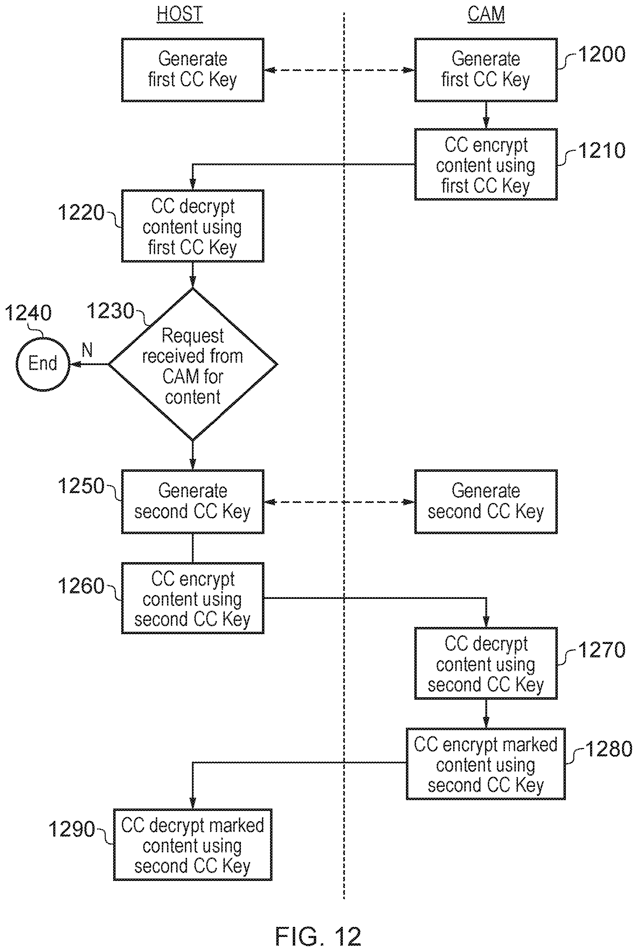

Figure 12 schematically illustrates the use of encryption keys for communication of non-access-controlled content via an encrypted transport stream link between a host module 10 and a CAM 30. At a step 1200, the CAM and the host module both compute a first CC key for establishing secure communication of non-access-controlled content between the CAM and host. The CAM performs CA decryption of access-controlled content, and the resultant non-access-controlled content is CC encrypted by the CC encryptor 33 using the first CC key (step 1210). The encrypted non-access-controlled content is communicated to the host module via the encrypted transport stream link.

At a step 1220, the CC decryptor 13 of the host module decrypts the non-access-controlled encrypted content using the first CC key. At a step 1230, the host module may receive a request from the CAM for non-access-controlled content to be processed by the marker unit 36. If the host receives no such request from the CAM, the control proceeds to a step 1240 at which the process ends as far as the encrypted transport stream link and CC key generation is concerned. However, upon receiving a request from the CAM for non-access-controlled content at the step 1230, the host and the CAM proceed to compute a second CC key (step 1250). In some examples, the CAM and the host may compute the first CC key and second CC key at substantially the same time. At a step 1260, decoded non-access-controlled content is encrypted by the CC encryptor 16 of the host module and communicated to the CAM via the encrypted transport stream link. In some examples, the step 1260 may be performed such that decoded non-access-controlled content is encrypted by the CC encryptor 16 using either the first CC key computed at the step 1200 or the second CC key computed at the step 1250. At a step 1270, the decoded non-access-controlled encrypted content is decrypted by the CC decryptor 35 of the CAM using the second CC key computed at the step 1250. In some examples, the CC decryptor 35 of the CAM may decrypt the decoded non-access-controlled content using the either the first CC key or the second CC key depending on which CC key was used for encryption at the step 1260.

The decoded non-access-controlled content generated at the step 1270 is passed to the marker unit 36 for generating marked content, and the marked content is passed to the CC encryptor 33 for encryption using the second CC key (step 1280). At a step 1290, the host receives encrypted marked content communicated from the CAM via the encrypted transport stream link, and the CC decryptor 13 decrypts the encrypted marked content using the second CC key.

This provides an example of an encrypted transport stream link that applies encryption according to an encryption key; and the CAM and the host module are configured to use a first encryption key for communication of the non-access controlled content from the CAM to the host module after processing by the access control unit, and a second encryption key for communication of the non-access-controlled content between the host module and the CAM for processing by the identification data module.

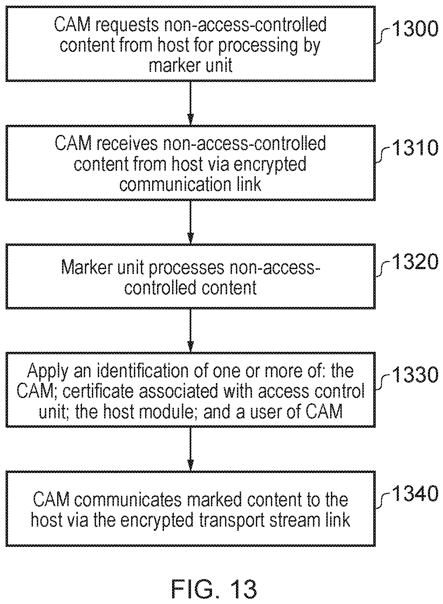

Figure 13 schematically illustrates the processing of decoded non-access-controlled to apply an identification and generate marked content. At a step 1300, the CAM 30 requests decoded non-access-controlled content from the host module 10 for processing by the marker unit 36. At a step 1310, the CAM receives the decoded non-access-controlled content via the encrypted transport stream link, and passes the decoded non-access-controlled content to the marker unit at a step 1320. The marker unit processes the decoded non-access-controlled content at a step 1330 to apply an identification of one or more of the following: the CAM; a certificate associated with the access control unit (CA decryptor 31) of the CAM; the host module; and a user of the CAM. At a step 1340, the CAM communicates the decoded non-access-controlled marked content to the host via the encrypted transport stream link.

This provides an example of a receiver, in which an identification data module is configured to process the non-access-controlled content to apply an identification of one or more selected from the list consisting of: the CAM; a certificate associated with the access control unit; the host module; and a user of the CAM.

Systems are currently available that use hypertext transfer protocol (HTTP) for transmitting encoded audio and/or video content from a content source to a receiver over a network. Dynamic Adaptive Streaming over HTTP (DASH) is a known adaptive streaming technique in which encoded audio and/or video content is partitioned into a plurality of segments, which are sequentially communicated to a receiver and reproduced. Each segment has content that when reproduced has an associated playback time duration, and segments are reproduced according to a reproduction schedule. DASH is an adaptive bit rate technique that encodes each segment at more than one bit rate, such that a plurality of segments exist for the same content with different video and/or audio quality. Each segment of content is available at a variety of different bit rates. For each segment of content, a higher bit rate segment or a lower bit rate segment can be selected in order to adapt to changes in bandwidth or content reproduction. In accordance with a current status, the receiver can request segments from the content source and adapt to changes in the current status by requesting segments that are encoded at a lower or higher bit rate.

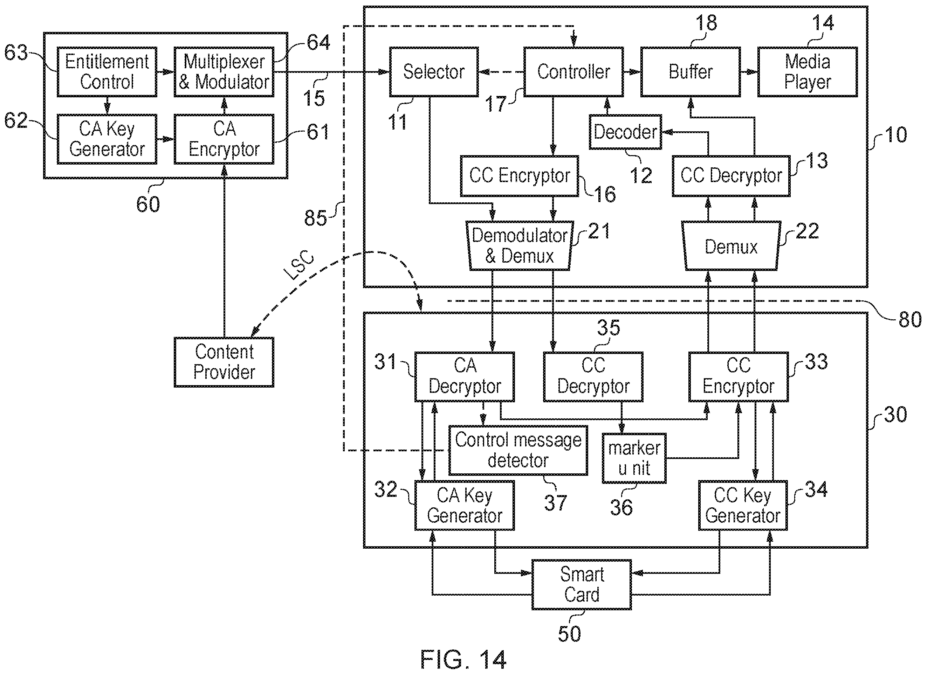

Figure 14 is a schematic diagram illustrating the operation of a CA system comprising a head end 60, a host module 10 and a CAM 30. The host module 10 comprises a selector 11, a decoder 12, a CC decryptor 13, a media player 14, a CC encryptor 16, a controller 17 and a buffer 18. The CAM 30 comprises a CA decryptor 31, a CA key generator 32, a CC encryptor 33, a CC key generator 34, a CC decryptor 35, a marker unit 36 and a control message detector 37. The CAM is configured to receive access-controlled content and a control message indicating whether content should be processed by the marker unit 36 to generate marked content. The CA decryptor receives the access-controlled content, and the control message detector 37 detects the control message. For a control message indicating that content should be processed by the marker unit 36, the control message detector 37 is configured to send a request, via a secure authentic channel (SAC) 85, to the host module requesting decoded non-access-controlled content from the controller 17. The host module 10 and the CAM 30 establish a SAC which is suitable for securely exchanging messages, such that the control message detector 37 can send a request to the controller 17 for content to be processed by the marker unit 36. The SAC is separate from the transport stream link and has a lower data rate than the transport stream link.

The CA decryptor 31 CA decrypts access-controlled content and the CAM communicates non-access-controlled content to the host module via the encrypted transport stream link. The decoder 12 decodes encoded non-access-controlled content and passes decoded non-access-controlled content to the controller 17. In dependence upon the control message detected by the control message detector 37 (and the request sent from the control message detector to the controller via the SAC 85), the controller is configured to pass the decoded non-access-controlled content either to the buffer 18 or to the CC encryptor 16. If the control message indicates that content should not be processed by the marker unit 36, the control message detector 37 does not send a request to the controller 17 via the SAC 85 for content, and the controller proceeds to pass decoded non-access-controlled content to the buffer 18.

In response to a control message indicating that content should be processed by the marker unit 36, the control message detector detects the control message and sends a request (via the SAC 85) to the controller 17 for decoded non-access-controlled content. In response to the request from the control message detector 37 for content to be processed by the marker unit 36, the controller 17 inhibits the provision of decoded non-access-controlled content to the buffer 18, and passes the decoded non-access-controlled content to the CC encryptor 16. The requested decoded non-access-controlled content is communicated from the CC encryptor 16 to the CAM via the encrypted transport stream link, and processed by the marker unit 36 to generate marked content. The CAM communicates the marked content to the host via the encrypted transport stream link, and the marked content is passed to the buffer 18.

For the case where the control message indicates that some of the content should be processed by the marker unit 36, the CAM is configured to request a first subset of decoded non-access-controlled content from the host for processing by the marker unit 36. The control message detector 37 is configured to send a request to the controller 17 via the SAC 85 for the first subset of decoded non-access-controlled content. In response to the request, the controller 17 passes a first subset of requested decoded non-access-controlled content to the CC encryptor 16 and a second, remaining (not requested by the control message detector for processing by the marker unit), subset of decoded non-access-controlled content is passed to the buffer 18.

The host module is configured to buffer the second, remaining, subset of the decoded non-access-controlled content to compensate for the time taken for processing the first subset of non-access-controlled content by the marker unit 36. The first subset of decoded non-access-controlled content is communicated to the CAM via the encrypted transport stream link, processed by the marker unit 36, and communicated to the host via the encrypted transport stream link. The first subset of marked content is passed to the buffer 18, where the first subset of marked content and the second subset of content are combined and subsequently passed to the media player 14.

In some examples, the content comprises a plurality of content segments, and the first subset of content comprises some but not all of the content segments. The host module is configured to request the content segments from the content source, and the CAM is configured to request segments of decoded content from the host for processing by the marker unit 36. The controller 17 comprises circuitry to inhibit the provision, other than to the CAM, of the non-access-controlled content provided by the host module to the CAM for processing by the marker unit 36.

The controller 17 is configured to receive decoded non-access-controlled content from the decoder 12, and pass the decoded content to either the buffer 18 or the CC encryptor 16 according to the request received from the control message detector 37. The controller 17 is configured to receive the request from the control message detector 37 and accordingly control the selector 11 to request content from the content source. Segments of content can be requested from the content source by the selector 11 in accordance with the request received by the controller 17 form the control message detector 37. The controller 17 is configured to control the selector, such that segments that should be processed by the marker unit 36 are requested earlier, against a reproduction schedule, than segments that should not be processed by the marker unit 36. The host module is configured to request segments in the first subset earlier, against a reproduction schedule, than segments in the second subset.

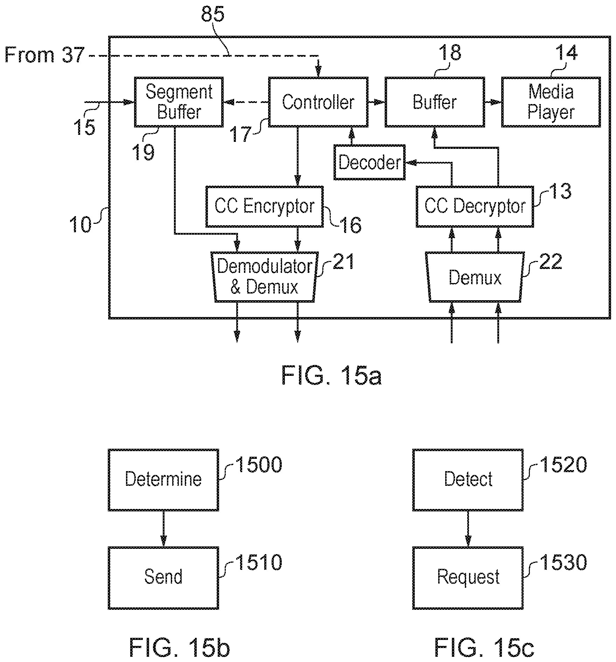

Figure 15a is a schematic diagram illustrating the operation of a host module 10 for use in an audio and/or video content receiver as illustrated in the CA system of Figure 14. The host module 10 comprises a decoder 12, a CC decryptor 13, a media player 14, a CC encryptor 16, a controller 17, a buffer 18 and a segment buffer 19. The content source is configured to communicate a control message to the CAM 30, which indicates that a first subset of content should be processed by the marker unit 36 and a second subset of content should not be processed by the marker unit 36. The control message detector 37 detects the control message and is configured to send a request to the controller 17. Accordingly, the controller 17 requests content segments from the content source, such that the content source communicates the first subset of content to the segment buffer 19 earlier, against a reproduction schedule, than content in the second subset.

Segments of encoded access-controlled content are buffered by the segment buffer 19 and communicated to the CAM 30 via the encrypted transport stream link for CA decryption. The CAM communicates segments of encoded non-access-controlled content to the host via the encrypted transport stream link. The decoder 12 decodes the segments of encoded non-access-controlled content and passes the decoded segments to the controller 17. In response to the request from the control message detector 37, the controller 17 is configured to pass the second subset of decoded segments to the buffer 18, and pass the first subset of segments to the CC encryptor 16.

The controller 17 is configured to monitor the occupancy of the segment buffer 19 and request content segments from the content source in accordance with the occupancy of the segment buffer 19. When the controller 17 identifies that the occupancy of the segment buffer 19 exceeds a first predetermined level, the controller 17 requests content segments from the content source that are encoded at a lower bit rate than the previously requested content segments. When the controller identifies that the occupancy of the DASH buffer 19 is less than a second predetermined level, the controller 17 requests content segments from the content source that are encoded at a higher bit rate than the previously requested content segments. The controller 17 monitors the segment buffer occupancy and requests segments from the content source in accordance with the buffer level to control and manage the occupancy of the segment buffer 19.

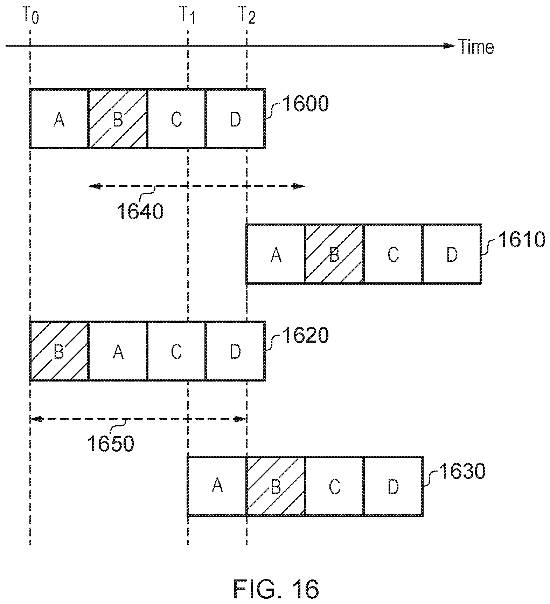

Figure 16 is a schematic timing diagram illustrating a content source that sequentially communicates segments A, B, C and D of encoded content to a receiver. Segment B comprises content that should be processed by the marker unit 36, whereas segments A, C and D should not be processed by the marker unit 36.

An example is shown for a common content source that communicates the segments in a sequence 1600. The common content source communicates segment A at time T₀ followed by segment B then segment C and finally segment D. This common approach communicates the segments according to the schedule by which they are to be reproduced (A, B, C, D). Segment A is CA decrypted, decoded and buffered by the buffer 18. The time taken to CA decrypt, decode and apply a watermark to segment B is shown by the arrow 1640. The additional time required to apply a watermark to segment B means that segment A is buffered to compensate for the time taken to apply a watermark to segment B. The segments A, B, C and D are reproduced according to the reproduction schedule 1610. The reproduction schedule 1610 begins with segment A at a time T₂, because segment A can only be reproduced once segment B has been processed by the marker unit 36 and provided to the buffer 18. This provides an example of a common approach in which segments are communicated form a content source at a time T₀ and reproduced starting at a time T₂.

According to some embodiments, the host module is configured to request segments that should be processed by the marker unit 36 earlier, against a reproduction schedule, than segments that should not be processed by the marker unit 36. In other examples, the content source could pre-emptively send them in that order along with an indication of the appropriate reproduction order. In some examples, the content source is configured to communicate segments to the host 10 in a sequence 1620 so that segment B is communicated earlier than segment A, at a time T₀. The time taken to CA decrypt, decode and apply a watermark to segment B is shown by the arrow 1650 (the arrows 1640 and 1650 are equal in length and represent the same length of time). Segment A, communicated after segment B, is CA decrypted, decoded and buffered by the buffer 18. Segments A, B, C and D are reproduced according to the reproduction schedule 1630. The reproduction schedule 1630 begins with segment A at a time T₁, because segment A can only be reproduced once segment B has been processed by the marker unit 36 and provided to the buffer 18.

This provides an example of communicating content to be processed by the marker unit 36 earlier, against a reproduction schedule, than content not to be processed by the marker unit 36. Communicating content according to the schedule 1620 allows the content to start being reproduced at the time T₁. The common approach communicates content according to the schedule 1600, which allows the content to start being reproduced at the time T₂. Therefore, a content source according to some embodiments can contribute to reducing the overall time delay associated with buffering, as content can be reproduced starting at time T₁₅ as opposed to the later time T₂ achieved by the common approach.

This provides an example of a content source that communicates content in the first subset (to be marked by marker unit 36) earlier against a reproduction schedule, than content in the second subset (not to be marked).

Figure 15b schematically illustrates example operations of a content source in which at a step 1500, the content source determines a subset of segments to be watermarked and, at a step 1510, sends those segments earlier, against a reproduction order, than segments not to be marked. In Figure 15b, the content receiver detects (at a step 1520) segments which require marking and requests (at a step 1530) those segments earlier, against a reproduction order, than segments not to be marked.

Overall, the content source 60, 90 in cooperation with the arrangement of Figure 15a and operating according to the flowchart of Figure 15b provides an example of content transmission system comprising: a content receiver as discussed above; and a content source (for example 60, cooperating with 90) configured to communicate access-controlled content to the content receiver and to communicate a control message to the CAM to indicate that a first subset of the content should be processed by the identification data module and a second, remaining, subset of the content should not be processed by the identification data module; in which the content source is configured to communicate content in the first subset earlier, against a reproduction schedule, than content in the second subset.

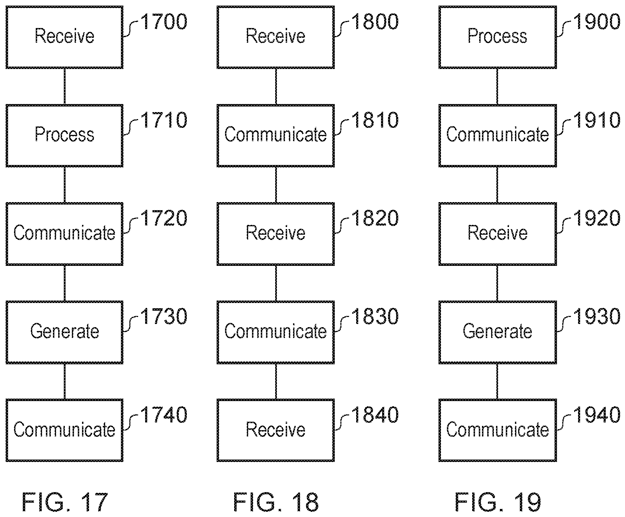

Figure 17 is a schematic flowchart illustrating a method of operation of an audio and/or video content receiver having a host module and a conditional access module (CAM), the method comprising:
receiving (at a step 1700) access-controlled content from a content source;
the CAM processing the access-controlled content to generate non-access-controlled content;
the CAM communicating (at a step 1710) the non-access-controlled content to the host module via an encrypted transport stream link;
the host module communicating (at a step 1720), via the encrypted transport stream link, at least some of the non-access-controlled content to the CAM for application of identification data;
the CAM generating(at a step 1730) marked audio and/or video content by processing the non-access-controlled content communicated to the CAM by the host module to apply identification data to that audio and/or video content; and
the CAM communicating (at a step 1740) the marked audio and/or video content to the host module via the encrypted transport stream link.

Figure 18 is a schematic flowchart illustrating a method of operation of a host module for use in an audio and/or video content receiver and connectable to a conditional access module (CAM) operable to generate marked audio and/or video content by applying identification data to audio and/or video content, the method comprising:
receiving (at a step 1800) audio and/or video access-controlled content from a content source;
communicating (at a step 1810) the access-controlled content to the CAM;
receiving (at a step 1820) non-access-controlled content from the CAM via an encrypted transport stream link;
communicating (at a step 1830), via the encrypted transport stream link, at least a subset of the non-access-controlled content to the CAM for processing to apply identification data; and
receiving (at a step 1840) marked audio and/or video content from the CAM via the encrypted transport stream link.

Figure 19 is a schematic flowchart illustrating a method of operation of a conditional access module (CAM) for use in an audio and/or video content receiver having a host module configured to receive audio and/or video access-controlled content from a content source, the method comprising:
processing (at a step 1900) access-controlled content to generate non-access-controlled content;
communicating (at a step 1910) the non-access-controlled content to the host module via an encrypted transport stream link;
receiving (at a step 1920) at least a subset of the non-access-controlled content from the host module via the encrypted transport stream link;
generating (at a step 1930) marked audio and/or video content by processing the non-access-controlled content received from the host module to apply identification data to that audio and/or video content; and
communicating (at a step 1940) the marked non-access-controlled content to the host module via the encrypted transport stream link.

In the examples given above, the indication of which segments or which content should be marked has come from the content source and has been indicated by a control message. In some examples, this could be according to the type of content or on request from a content provider. In other examples, it could be a random or pseudo-random selection at the content source. In other examples the content receiver could cause all content to be marked, or could cause all content received in a certain time period (such as between 1700 and 2100 each day) to be marked, or could cause a random or pseudo-random selection of content to be marked, or could cause a random or pseudo-random selection of content in a certain time period or on certain days to be marked, or could cause all content of a certain type or received by a certain channel (such as sports content or content received on a sports channel) to be marked.

Where methods of processing, coding or decoding are discussed above, it will be appreciated that apparatus configured to perform such methods are also considered to represent embodiments of the disclosure. It will also be appreciated that video storage, transmission, capture and/or display apparatus incorporating such techniques is considered to represent an embodiment of the present disclosure.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be apparent that numerous modifications and variations of the present disclosure are possible in light of the above teachings. It is therefore to be understood that within the scope of the appended claims, the technology may be practiced otherwise than as specifically described herein.

## Claims

1. An audio and/or video content receiver configured to receive encoded audio and/or video access-controlled content from a content source (60), the content receiver comprising:
a host module (10); and
a conditional access module (CAM) (30, 50) having an access control unit (31) for processing access-controlled content to generate non-access-controlled content, the host module and the CAM being arranged to provide an encrypted transport stream link (16, 21, 35, 33, 22, 13) for communication of the non-access-controlled content between the CAM and the host module;
in which:
the CAM comprises an identification data module (36) configured to apply a digital watermark to decoded audio and/or video non-access-controlled content to generate marked decoded audio and/or video non-access-controlled content;
the CAM is configured to communicate, via the encrypted transport stream link, encoded audio and/or video non-access-controlled content to the host module;
the host module comprises a content decoder (12) to decode the encoded audio and/or video non-access-controlled content to generate decoded audio and/or video non-access-controlled content
the CAM is configured to receive a control message, from the content source, indicating whether some or all of the audio and/or video access-controlled content should be processed by the identification data module to apply the digital watermark;
in response to receiving the control message, the CAM is configured to request at least some of the decoded audio and/or video non-access-controlled content from the host module for processing by the identification data module;
the host module is configured to communicate, via the encrypted transport stream link, the at least some of the decoded audio and/or video non-access-controlled content to the CAM for application of the digital watermark by the identification data module; and
the CAM is configured to communicate the marked decoded audio and/or video non-access-controlled content to the host module via the encrypted transport stream link.

2. A receiver according to claim 1, in which, in response to the CAM requesting a first subset of the decoded audio and/or video non-access-controlled content for processing by the identification data module, the host module is configured to buffer a second, remaining, subset of the decoded audio and/or video non-access-controlled content to compensate for time taken for the processing by the identification data module to be performed in respect of the first subset of the decoded audio and/or video non-access-controlled content.

3. A receiver according to claim 2, in which the content comprises a plurality of content segments, and the first subset comprises some but not all of the content segments.

4. A receiver according to claim 3, in which the host module is configured to request the content segments from the content source.

5. A receiver according to claim 4, in which the host module is configured to request segments in the first subset earlier, against a reproduction schedule, than segments in the second subset.

6. A receiver according to claim 1, in which:
the encrypted transport stream link applies encryption according to an encryption key; and
the CAM and the host module are configured to use a first encryption key for communication of the encoded audio and/or video non-access controlled content from the CAM to the host module after processing by the access control unit, and a second encryption key for communication of the decoded audio and/or video non-access-controlled content between the host module and the CAM for processing by the identification data module.

7. A receiver according to claim 1, in which the identification data module is configured to process the decoded audio and/or video non-access-controlled content to apply an identification of one or more selected from the list consisting of:
the CAM;
a certificate associated with the access control unit;
the host module; and
a user of the CAM.

8. A receiver according to claim 1, in which the CAM is removable.

9. A host module (10) for use in an audio and/or video content receiver configured to receive encoded audio and/or video access-controlled content from a content source (60) and connectable to a conditional access module (CAM) (30, 50) having an access control unit (31) for processing access-controlled content to generate non-access-controlled content, the CAM comprising an identification data module (36) to apply a digital watermark to decoded audio and/or video non-access-controlled content to generate marked decoded audio and/or video non-access controlled content;
the host module being arranged to communicate audio and/or video non-access-controlled content between the CAM and the host module via an encrypted transport stream link (16, 21, 35, 33, 22, 13);
the host module being configured to receive, from the CAM, encoded audio and/or video non-access-controlled content;
the host module comprises a content decoder (12) to decode the encoded audio and/or video non-access-controlled content to generate decoded audio and/or video non-access-controlled content;
the host module is configured to receive a request, from the CAM, for at least some of the decoded audio and/or video non-access-controlled content for processing by the identification data module; and
the host module being configured to communicate, via the encrypted transport stream link, the at least some of the decoded audio and/or video non-access-controlled content to the CAM for processing by the identification data module, in response to receiving the request for the at least some of the decoded audio and/or video non-access-controlled content, and to receive, from the CAM, the marked decoded audio and/or video non-access-controlled content via the encrypted transport stream link.

10. A conditional access module (CAM) (30, 50) for use in an audio and/or video content receiver configured to receive encoded audio and/or video access-controlled content from a content source (60) and having a host module (10) comprising a content decoder (12) to decode encoded non-access-controlled content to generate decoded non-access-controlled content, the CAM comprising:
an access control unit (31) for processing access-controlled content to generate non-access-controlled content; and
an identification data module (36) to apply a digital watermark to decoded audio and/or video non-access controlled content to generate marked decoded audio and/or video non-access-controlled content;
in which:
the CAM is arranged to communicate encoded audio and/or video non-access-controlled content to the host module via an encrypted transport stream link (16, 21, 35, 33, 22, 13);
the CAM is configured to receive a control message, from the content source, indicating whether some or all of the access-controlled content should be processed by the identification data module to apply the digital watermark;
in response to receiving the control message, the CAM is configured to request at least some of the decoded audio and/or video non-access-controlled content from the host module for processing by the identification data module;
the CAM is configured to receive, via the encrypted transport stream link, the at least some of the decoded audio and/or video non-access-controlled content from the host module to the CAM for processing by the identification data module; and
the CAM is configured to communicate, via the encrypted transport stream link, the marked decoded audio and/or video non-access-controlled content to the host module.

11. A method of operation of an audio and/or video content receiver having a host module and a conditional access module (CAM), the method comprising:
receiving (200) encoded audio and/or video access-controlled content from a content source;
the CAM processing (220) the encoded audio and/or video access-controlled content to generate encoded audio and/or video non-access-controlled content;
the CAM communicating the encoded audio and/or video non-access-controlled content to the host module via an encrypted transport stream link;
the host module decoding (230) the encoded audio and/or video non-access-controlled content to generate decoded audio and/or video non-access-controlled content;
the CAM receiving(240) a control message, from the content source, indicating whether some or all of the audio and/or video access-controlled content should be processed to apply a digital watermark;
in response to receiving the control message, the CAM requesting (260) at least some of the decoded audio and/or video non-access-controlled content from the host module for processing to apply the digital watermark;
the host module communicating (280), via the encrypted transport stream link, the at least some of the decoded audio and/or video non-access-controlled content to the CAM for application of identification data;
the CAM generating (290) marked decoded audio and/or video non-access-controlled content by processing the decoded audio and/or video non-access-controlled content communicated to the CAM by the host module to apply the digital watermark to that decoded audio and/or video non-access-controlled content; and
the CAM communicating the marked decoded audio and/or video non-access-controlled content to the host module via the encrypted transport stream link.

12. A method of operation of a host module for use in an audio and/or video content receiver and connectable to a conditional access module (CAM) operable to generate marked decoded audio and/or video non-access-controlled content by applying a digital watermark to decoded audio and/or video non-access-controlled content, the method comprising:
receiving (1800) encoded audio and/or video access-controlled content from a content source;
communicating (1810) the encoded audio and/or video access-controlled content to the CAM;
receiving (1820) encoded audio and/or video non-access-controlled content from the CAM via an encrypted transport stream link;
decoding the encoded audio and/or video non-access-controlled content to generate decoded non-access-controlled content;
receiving a request for at least a subset the decoded audio and/or video non-access-controlled content from the host module for processing to apply the digital watermark ;
communicating (1830), via the encrypted transport stream link, the at least a subset of the decoded audio and/or video non-access-controlled content to the CAM for processing to apply the digital watermark, in response to receiving the request for the at least a subset of the decoded audio and/or video non-access-controlled content; and
receiving (1840) the marked decoded audio and/or video non-access-controlled content from the CAM via the encrypted transport stream link.

13. A method of operation of a conditional access module (CAM) for use in an audio and/or video content receiver having a host module configured to receive encoded audio and/or video access-controlled content from a content source and to decode encoded non-access controlled content to generate decoded non-access-controlled content, the method comprising:
processing (1900) encoded audio and/or video access-controlled content to generate encoded audio and/or video non-access-controlled content;
communicating (1910) the encoded audio and/or video non-access-controlled content to the host module via an encrypted transport stream link;
receiving a control message, from the content source, indicating whether some or all of the audio and/or video access-controlled content should be processed to apply the digital watermark;
requesting, in response to receiving the control message, at least a subset of the decoded audio and/or video non-access-controlled content from the host module for processing;
receiving (1920) the at least a subset of the decoded audio and/or video non-access-controlled content from the host module via the encrypted transport stream link;
generating (1930) marked decoded audio and/or video non-access-controlled content by processing the decoded audio and/or video non-access-controlled content received from the host module to apply the digital watermark to that audio and/or video non-access-controlled content; and
communicating (1940) the marked decoded audio and/or video non-access-controlled content to the host module via the encrypted transport stream link.

14. Computer software which, when executed by a computer, causes the computer to perform the method of any one of claims 11 to 13.

## Patentansprüche

1. Audio- und/oder Videoinhalt-Empfänger, ausgelegt zum Empfangen von zugriffsgesteuertem codierten Audio- und/oder Videoinhalt von einer Inhalt-Quelle (60), wobei der Inhalt-Empfänger Folgendes umfasst:
ein Host-Modul (10); und
ein Bedingter-Zugriff-Modul (CAM: Conditional Access Module) (30, 50) mit einer Zugriffssteuereinheit (31) zum Verarbeiten von zugriffsgesteuertem Inhalt, um nicht zugriffsgesteuerten Inhalt zu erzeugen, wobei das Host-Modul und das CAM zum Bereitstellen eines verschlüsselten Transportstromlinks (16, 21, 35, 33, 22, 13) zur Kommunikation des nicht zugriffsgesteuerten Inhalts zwischen dem CAM und dem Host-Modul eingerichtet sind;
wobei:
das CAM ein Identifikationsdatenmodul (36) umfasst, ausgelegt zum Anwenden eines digitalen Wasserzeichens auf nicht zugriffsgesteuerten decodierten Audio- und/oder Videoinhalt, um markierten nicht zugriffsgesteuerten decodierten Audio- und/oder Videoinhalt zu erzeugen;
das CAM zum Kommunizieren von nicht zugriffsgesteuertem codierten Audio- und/oder Videoinhalt an das Host-Modul über den verschlüsselten Transportstromlink ausgelegt ist;
das Host-Modul einen Inhalt-Decodierer (12) zum Decodieren des nicht zugriffsgesteuerten codierten Audio- und/oder Videoinhalts, um nicht zugriffsgesteuerten decodierten Audio- und/oder Videoinhalt zu erzeugen, umfasst,
das CAM zum Empfangen einer Steuernachricht von der Inhalt-Quelle ausgelegt ist, die angibt, ob ein Teil des oder der gesamte zugriffsgesteuerte Audio- und/oder Videoinhalt durch das Identifikationsdatenmodul zum Anwenden des digitalen Wasserzeichens verarbeitet werden sollte;
das CAM als Reaktion auf einen Empfang der Steuernachricht zum Anfordern zumindest eines Teils des nicht zugriffsgesteuerten decodierten Audio- und/oder Videoinhalts von dem Host-Modul zur Verarbeitung durch das Identifikationsdatenmodul ausgelegt ist;
das Host-Modul zum Kommunizieren zumindest des Teils des nicht zugriffsgesteuerten decodierten Audio- und/oder Videoinhalts an das CAM über den verschlüsselten Transportstromlink zur Anwendung des digitalen Wasserzeichens durch das Identifikationsdatenmodul ausgelegt ist; und
das CAM zum Kommunizieren des markierten nicht zugriffsgesteuerten decodierten Audio- und/oder Videoinhalts über den verschlüsselten Transportstromlink an das Host-Modul ausgelegt ist.

2. Empfänger nach Anspruch 1, wobei das Host-Modul als Reaktion darauf, dass das CAM eine erste Teilmenge des nicht zugriffsgesteuerten decodierten Audio- und/oder Videoinhalts zur Verarbeitung durch das Identifikationsdatenmodul anfordert, zum Puffern einer zweiten verbleibenden Teilmenge des nicht zugriffsgesteuerten decodierten Audio- und/oder Videoinhalts ausgelegt ist, um eine Zeit zu kompensieren, die für die hinsichtlich der ersten Teilmenge des nicht zugriffsgesteuerten decodierten Audio- und/oder Videoinhalts durchzuführende Verarbeitung durch das Identifikationsdatenmodul in Anspruch genommen wird.

3. Empfänger nach Anspruch 2, wobei der Inhalt mehrere Inhalt-Segmente umfasst und die erste Teilmenge einige, jedoch nicht alle, der Inhalt-Segmente umfasst.

4. Empfänger nach Anspruch 3, wobei das Host-Modul zum Anfordern der Inhalt-Segmente von der Inhalt-Quelle ausgelegt ist.

5. Empfänger nach Anspruch 4, wobei das Hostmodul dazu ausgelegt ist, Segmente in der ersten Teilmenge entgegen einem Wiedergabeablaufplan früher als Segmente in der zweiten Teilmenge abzurufen.

6. Empfänger nach Anspruch 1, wobei:
der verschlüsselte Transportstromlink eine Verschlüsselung gemäß einem Verschlüsselungsschlüssel anwendet; und
das CAM und das Host-Modul ausgelegt sind zum Verwenden eines ersten Verschlüsselungsschlüssels zur Kommunikation des nicht zugriffsgesteuerten codierten Audio- und/oder Videoinhalts von dem CAM an das Host-Modul nach Verarbeitung durch die Zugriffssteuereinheit und eines zweiten Verschlüsselungsschlüssels zur Kommunikation des nicht zugriffsgesteuerten decodierten Audio- und/oder Videoinhalts zwischen dem Host-Modul und dem CAM zur Verarbeitung durch das Identifikationsdatenmodul.

7. Empfänger nach Anspruch 1, wobei das Identifikationsdatenmodul zum Verarbeiten des nicht zugriffsgesteuerten decodierten Audio- und/oder Videoinhalts ausgelegt ist, um eine Identifikation von einem oder mehreren aus der aus Folgenden bestehenden Liste anzuwenden:
dem CAM;
einem mit der Zugriffssteuereinheit assoziierten Zertifikat;
dem Host-Modul; und
einem Benutzer des CAM.

8. Empfänger nach Anspruch 1, wobei das CAM entfernbar ist.

9. Host-Modul (10) zur Verwendung in einem Audio- und/oder Videoinhalt-Empfänger, ausgelegt zum Empfangen von zugriffsgesteuertem codierten Audio- und/oder Videoinhalt von einer Inhalt-Quelle (60) und verbindbar mit einem Bedingter-Zugriff-Modul (CAM: Conditional Access Module) (30, 50) mit einer Zugriffssteuereinheit (31) zum Verarbeiten von zugriffsgesteuertem Inhalt, um nicht zugriffsgesteuerten Inhalt zu erzeugen, wobei das CAM ein Identifikationsdatenmodul (36) zum Anwenden eines digitalen Wasserzeichens auf nicht zugriffsgesteuerten decodierten Audio- und/oder Videoinhalt, um markierten nicht zugriffsgesteuerten decodierten Audio- und/oder Videoinhalt zu erzeugen, umfasst;
wobei das Host-Modul zum Kommunizieren von nicht zugriffsgesteuertem Audio- und/oder Videoinhalt zwischen dem CAM und dem Host-Modul über einen verschlüsselten Transportstromlink (16, 21, 35, 33, 22, 13) eingerichtet ist;
wobei das Host-Modul zum Empfangen von nicht zugriffsgesteuertem codierten Audio- und/oder Videoinhalt von dem CAM ausgelegt ist;
wobei das Host-Modul einen Inhalt-Decodierer (12) zum Decodieren des nicht zugriffsgesteuerten codierten Audio- und/oder Videoinhalts, um nicht zugriffsgesteuerten decodierten Audio- und/oder Videoinhalt zu erzeugen, umfasst;
wobei das Host-Modul zum Empfangen einer Anforderung von dem CAM für zumindest einen Teil des nicht zugriffsgesteuerten decodierten Audio- und/oder Videoinhalts zur Verarbeitung durch das Identifikationsdatenmodul ausgelegt ist; und
wobei das Host-Modul ausgelegt ist zum Kommunizieren zumindest des Teils des nicht zugriffsgesteuerten decodierten Audio- und/oder Videoinhalts an das CAM über den verschlüsselten Transportstromlink zur Verarbeitung durch das Identifikationsdatenmodul als Reaktion auf einen Empfang der Anforderung für zumindest den Teil des nicht zugriffsgesteuerten decodierten Audio- und/oder Videoinhalts und zum Empfangen des markierten nicht zugriffsgesteuerten decodierten Audio- und/oder Videoinhalts von dem CAM über den verschlüsselten Transportstromlink.

10. Bedingter-Zugriff-Modul (CAM: Conditional Access Module) (30, 50) zur Verwendung in einem Audio- und/oder Videoinhalt-Empfänger, ausgelegt zum Empfangen von zugriffsgesteuertem codierten Audio- und/oder Videoinhalt von einer Inhalt-Quelle (60) und ein Host-Modul (10) aufweisend, das einen Inhalt-Decodierer (12) zum Decodieren von nicht zugriffsgesteuertem codierten Inhalt, um nicht zugriffsgesteuerten decodierten Inhalt zu erzeugen, umfasst, wobei das CAM Folgendes umfasst:
eine Zugriffssteuereinheit (31) zum Verarbeiten von zugriffsgesteuertem Inhalt, um nicht zugriffsgesteuerten Inhalt zu erzeugen; und
ein Identifikationsdatenmodul (36) zum Anwenden eines digitalen Wasserzeichens auf nicht zugriffsgesteuerten decodierten Audio- und/oder Videoinhalt, um markierten nicht zugriffsgesteuerten decodierten Audio- und/oder Videoinhalt zu erzeugen;
wobei:
das CAM zum Kommunizieren von nicht zugriffsgesteuertem codierten Audio- und/oder Videoinhalt an das Host-Modul über einen verschlüsselten Transportstromlink (16, 21, 35, 33, 22, 13) ausgelegt ist;
das CAM zum Empfangen einer Steuernachricht von der Inhalt-Quelle ausgelegt ist, die angibt, ob ein Teil des oder der gesamte zugriffsgesteuerte Inhalt durch das Identifikationsdatenmodul zum Anwenden des digitalen Wasserzeichens verarbeitet werden sollte;
das CAM als Reaktion auf einen Empfang der Steuernachricht zum Anfordern zumindest eines Teils des nicht zugriffsgesteuerten decodierten Audio- und/oder Videoinhalts von dem Host-Modul zur Verarbeitung durch das Identifikationsdatenmodul ausgelegt ist;
das CAM zum Empfangen zumindest des Teils des nicht zugriffsgesteuerten decodierten Audio- und/oder Videoinhalts von dem Host-Modul an das CAM über den verschlüsselten Transportstromlink zur Verarbeitung durch das Identifikationsdatenmodul ausgelegt ist; und
das CAM zum Kommunizieren des markierten nicht zugriffsgesteuerten decodierten Audio- und/oder Videoinhalts an das Host-Modul über den verschlüsselten Transportstromlink ausgelegt ist.

11. Verfahren zum Betrieb eines Audio- und/oder Videoinhalt-Empfängers mit einem Host-Modul und einem Bedingter-Zugriff-Modul (CAM: Conditional Access Module), wobei das Verfahren Folgendes umfasst:
Empfangen (200) von zugriffsgesteuertem codierten Audio- und/oder Videoinhalt von einer Inhalt-Quelle;
Verarbeiten (220), durch das CAM, des zugriffsgesteuerten codierten Audio- und/oder Videoinhalts, um nicht zugriffsgesteuerten codierten Audio- und/oder Videoinhalt zu erzeugen;
Kommunizieren, durch das CAM, des nicht zugriffsgesteuerten codierten Audio- und/oder Videoinhalts an das Host-Modul über einen verschlüsselten Transportstromlink;
Decodieren (230), durch das Host-Modul, des nicht zugriffsgesteuerten codierten Audio- und/oder Videoinhalts, um nicht zugriffsgesteuerten decodierten Audio- und/oder Videoinhalt zu erzeugen;
Empfangen (240), durch das CAM, einer Steuernachricht von der Inhalt-Quelle, die angibt, ob ein Teil des oder der gesamte zugriffsgesteuerte Audio- und/oder Videoinhalt zum Anwenden des digitalen Wasserzeichens verarbeitet werden sollte;
Anfordern (260), durch das CAM als Reaktion auf einen Empfang der Steuernachricht, zumindest eines Teils des nicht zugriffsgesteuerten decodierten Audio- und/oder Videoinhalts von dem Host-Modul zur Verarbeitung zum Anwenden des digitalen Wasserzeichens;
Kommunizieren (280), durch das Host-Modul, zumindest des Teils des nicht zugriffsgesteuerten decodierten Audio- und/oder Videoinhalts an das CAM über den verschlüsselten Transportstromlink zur Anwendung von Identifikationsdaten;
Erzeugen (290), durch das CAM, von markiertem nicht zugriffsgesteuerten decodierten Audio- und/oder Videoinhalt durch Verarbeiten des durch das Host-Modul an das CAM kommunizierten nicht zugriffsgesteuerten decodierten Audio- und/oder Videoinhalts zum Anwenden des digitalen Wasserzeichens auf diesen nicht zugriffsgesteuerten decodierten Audio- und/oder Videoinhalt; und
Kommunizieren, durch das CAM, des markierten nicht zugriffsgesteuerten decodierten Audio- und/oder Videoinhalts an das Host-Modul über den verschlüsselten Transportstromlink.

12. Verfahren zum Betrieb eines Host-Moduls zur Verwendung in einem Audio- und/oder Videoinhalt-Empfänger und verbindbar mit einem Bedingter-Zugriff-Modul (CAM: Conditional Access Module), betreibbar zum Erzeugen von markiertem nicht zugriffsgesteuerten decodierten Audio- und/oder Videoinhalt durch Anwenden eines digitalen Wasserzeichens auf nicht zugriffsgesteuerten decodierten Audio- und/oder Videoinhalt, wobei das Verfahren Folgendes umfasst:
Empfangen (1800) von zugriffsgesteuertem codierten Audio- und/oder Videoinhalt von einer Inhalt-Quelle;
Kommunizieren (1810) des codierten zugriffsgesteuerten Audio- und/oder Videoinhalts an das CAM;
Empfangen (1820) von nicht zugriffsgesteuertem codierten Audio- und/oder Videoinhalt von dem CAM über einen verschlüsselten Transportstromlink;
Decodieren des nicht zugriffsgesteuerten codierten Audio- und/oder Videoinhalts, um nicht zugriffsgesteuerten decodierten Inhalt zu erzeugen;
Empfangen einer Anforderung für zumindest eine Teilmenge des nicht zugriffsgesteuerten decodierten Audio- und/oder Videoinhalts von dem Host-Modul zur Verarbeitung zum Anwenden des digitalen Wasserzeichens;
Kommunizieren (1830) zumindest der Teilmenge des nicht zugriffsgesteuerten decodierten Audio- und/oder Videoinhalts an das CAM über den verschlüsselten Transportstromlink zur Verarbeitung zum Anwenden des digitalen Wasserzeichens als Reaktion auf einen Empfang der Anforderung für zumindest die Teilmenge des nicht zugriffsgesteuerten decodierten Audio- und/oder Videoinhalts; und
Empfangen (1840) des markierten nicht zugriffsgesteuerten decodierten Audio- und/oder Videoinhalts von dem CAM über den verschlüsselten Transportstromlink.

13. Verfahren zum Betrieb eines Bedingter-Zugriff-Moduls (CAM: Conditional Access Module) zur Verwendung in einem Audio- und/oder Videoinhalt-Empfänger mit einem Host-Modul, ausgelegt zum Empfangen von zugriffsgesteuertem codierten Audio- und/oder Videoinhalt von einer Inhalt-Quelle und zum Decodieren von nicht zugriffsgesteuertem codierten Inhalt, um nicht zugriffsgesteuerten decodierten Inhalt zu erzeugen, wobei das Verfahren Folgendes umfasst:
Verarbeiten (1900) von zugriffsgesteuertem codierten Audio- und/oder Videoinhalt, um nicht zugriffsgesteuerten codierten Audio- und/oder Videoinhalt zu erzeugen;
Kommunizieren (1910) des codierten nicht zugriffsgesteuerten Audio- und/oder Videoinhalts an das Host-Modul über einen verschlüsselten Transportstromlink;
Empfangen einer Steuernachricht von der Inhalt-Quelle, die angibt, ob ein Teil des oder der gesamte zugriffsgesteuerte Audio- und/oder Videoinhalt zum Anwenden des digitalen Wasserzeichens verarbeitet werden sollte;
Anfordern, als Reaktion auf einen Empfang der Steuernachricht, zumindest einer Teilmenge des nicht zugriffsgesteuerten decodierten Audio- und/oder Videoinhalts von dem Host-Modul zur Verarbeitung;
Empfangen (1920) zumindest der Teilmenge des nicht zugriffsgesteuerten decodierten Audio- und/oder Videoinhalts von dem Host-Modul über den verschlüsselten Transportstromlink;
Erzeugen (1930) von markiertem nicht zugriffsgesteuerten decodierten Audio- und/oder Videoinhalt durch Verarbeiten des von dem Host-Modul empfangenen nicht zugriffsgesteuerten decodierten Audio- und/oder Videoinhalts zum Anwenden des digitalen Wasserzeichens auf diesen nicht zugriffsgesteuerten Audio- und/oder Videoinhalt; und
Kommunizieren (1940) des markierten nicht zugriffsgesteuerten decodierten Audio- und/oder Videoinhalts an das Host-Modul über den verschlüsselten Transportstromlink.

14. Computersoftware, die bei Ausführung durch einen Computer bewirkt, dass der Computer das Verfahren nach einem der Ansprüche 11 bis 13 durchführt.

## Revendications

1. Récepteur de contenu audio et/ou vidéo configuré pour recevoir un contenu audio et/ou vidéo à accès commandé codé à partir d'une source de contenu (60), le récepteur de contenu comprenant :
un module hôte (10) ; et
un module d'accès conditionnel (CAM) (30, 50) doté d'une unité de commande d'accès (31) pour le traitement d'un contenu à accès commandé afin de générer un contenu à accès non commandé, le module hôte et le CAM étant agencés pour fournir une liaison de flux de transport crypté (16, 21, 35, 33, 22, 13) pour la communication du contenu à accès non commandé entre le CAM et le module hôte ; dans lequel :
le CAM comprend un module de données d'identification (36) configuré pour appliquer un filigrane numérique à un contenu audio et/ou vidéo à accès non commandé décodé afin de générer un contenu audio et/ou vidéo à accès non commandé décodé filigrané ;
le CAM est configuré pour communiquer, par l'intermédiaire de la liaison de flux de transport crypté, un contenu audio et/ou vidéo à accès non commandé codé au module hôte ;
le module hôte comprend un décodeur de contenu (12) pour décoder le contenu audio et/ou vidéo à accès non commandé codé afin de générer un contenu audio et/ou vidéo à accès non commandé décodé
le CAM est configuré pour recevoir, à partir de la source de contenu, un message de commande indiquant qu'une partie ou la totalité du contenu audio et/ou vidéo à accès commandé doit être traitée par le module de données d'identification pour appliquer le filigrane numérique ;
en réponse à la réception du message de commande, le CAM est configuré pour demander au moins une partie du contenu audio et/ou vidéo à accès non commandé décodé au module hôte en vue de son traitement par le module de données d'identification ;
le module hôte est configuré pour communiquer, par l'intermédiaire de la liaison de flux de transport crypté, au moins une partie du contenu audio et/ou vidéo à accès non commandé décodé au CAM en vue de l'application du filigrane numérique par le module de données d'identification ; et
le CAM est configuré pour communiquer le contenu audio et/ou vidéo à accès non commandé décodé filigrané au module hôte par l'intermédiaire de la liaison de flux de transport crypté.

2. Récepteur selon la revendication 1, dans lequel, en réponse à une demande par le CAM d'un premier sous-ensemble du contenu audio et/ou vidéo à accès non commandé décodé en vue de son traitement par le module de données d'identification, le module hôte est configuré pour mettre en mémoire tampon un second sous-ensemble, restant, du contenu audio et/ou vidéo à accès non commandé décodé afin de compenser le temps pris par le traitement devant être réalisé par le module de données d'identification relativement au premier sous-ensemble du contenu audio et/ou vidéo à accès commandé décodé.

3. Récepteur selon la revendication 2, dans lequel le contenu comprend une pluralité de segments de contenu, et le premier sous-ensemble comprend certains des segments de contenu mais pas tous.

4. Récepteur selon la revendication 3, dans lequel le module hôte est configuré pour demander les segments de contenu à la source de contenu.

5. Récepteur selon la revendication 4, dans lequel le module hôte est configuré pour demander des segments dans le premier sous-ensemble plus tôt, relativement à un calendrier de reproduction, que des segments dans le second sous-ensemble.

6. Récepteur selon la revendication 1, dans lequel :
la liaison de flux de transport crypté applique un cryptage selon une clé de cryptage ; et
le CAM et le module hôte sont configurés pour utiliser une première clé de cryptage pour la communication du contenu audio et/ou vidéo à accès non commandé codé depuis le MAC vers le module hôte après son traitement par l'unité de commande d'accès, et une seconde clé de cryptage pour la communication du contenu audio et/ou vidéo à accès non commandé décodé entre le module hôte et le MAC en vue de son traitement par le module de données d'identification.

7. Récepteur selon la revendication 1, dans lequel le module de données d'identification est configuré pour traiter le contenu audio et/ou vidéo à accès non commandé décodé afin d'appliquer une identification d'un ou plusieurs éléments sélectionnés dans la liste comprenant :
le CAM ;
un certificat associé à l'unité de commande d'accès ;
le module hôte ; et
un utilisateur du CAM.

8. Récepteur selon la revendication 1, dans lequel le CAM est amovible.

9. Module hôte (10) destiné à être utilisé dans un récepteur de contenu audio et/ou vidéo configuré pour recevoir un contenu audio et/ou vidéo à accès commandé codé à partir d'une source de contenu (60) et pouvant être connecté à un module d'accès conditionnel (CAM) (30, 50) doté d'une unité de commande d'accès (31) pour le traitement d'un contenu à accès commandé afin de générer un contenu à accès non commandé, le CAM comprenant un module de données d'identification (36) pour appliquer un filigrane numérique au contenu audio et/ou vidéo à accès non commandé décodé afin de générer un contenu audio et/ou vidéo à accès non commandé décodé filigrané ;
le module hôte étant agencé pour communiquer un contenu audio et/ou vidéo à accès non commandé entre le CAM et le module hôte par l'intermédiaire d'une liaison de flux de transport crypté (16, 21, 35, 33, 22, 13) ;
le module hôte étant configuré pour recevoir, à partir du CAM, un contenu audio et/ou vidéo à accès non commandé codé ;
le module hôte comprend un décodeur de contenu (12) pour décoder le contenu audio et/ou vidéo à accès non commandé codé afin de générer un contenu audio et/ou vidéo à accès non commandé décodé ;
le module hôte est configuré pour recevoir, à partir du CAM, une demande d'au moins une partie du contenu audio et/ou vidéo à accès non commandé décodé en vue de traitement par le module de données d'identification ; et
le module hôte étant configuré pour communiquer, par l'intermédiaire de la liaison de flux de transport crypté, au moins une partie du contenu audio et/ou vidéo à accès non commandé décodé au MAC en vue de son traitement par le module de données d'identification, en réponse à la réception de la demande de l'au moins une partie du contenu audio et/ou vidéo à accès non commandé décodé, et recevoir, à partir du CAM, le contenu audio et/ou vidéo à accès non commandé décodé filigrané par l'intermédiaire de la liaison de flux de transport crypté.

10. Module d'accès conditionnel (CAM) (30, 50) destiné à être utilisé dans un récepteur de contenu audio et/ou vidéo configuré pour recevoir un contenu audio et/ou vidéo à accès commandé codé à partir d'une source de contenu (60) et doté d'un module hôte (10) comprenant un décodeur de contenu (12) pour décoder un contenu à accès non commandé codé afin de générer un contenu à accès non commandé décodé, le CAM comprenant :
une unité de commande d'accès (31) pour le traitement du contenu à accès commandé afin de générer un contenu à accès non commandé ; et
un module de données d'identification (36) pour appliquer un filigrane numérique au contenu audio et/ou vidéo à accès non commandé décodé afin de générer un contenu audio et/ou vidéo à accès non commandé décodé filigrané ;
dans lequel :
le CAM est organisé pour communiquer au module hôte un contenu audio et/ou vidéo à accès non commandé codé par l'intermédiaire d'une liaison de flux de transport crypté (16, 21, 35, 33, 22, 13) ;
le CAM est configuré pour recevoir, depuis la source de contenu, un message de commande indiquant qu'une partie ou la totalité du contenu à accès commandé doit être traitée par le module de données d'identification pour appliquer le filigrane numérique ;
en réponse à la réception du message de commande, le CAM est configuré pour demander au moins une partie du contenu audio et/ou vidéo à accès non commandé décodé au module hôte en vue de son traitement par le module de données d'identification ;
le CAM est configuré pour recevoir, par l'intermédiaire de la liaison de flux de transport crypté, l'au moins une partie du contenu audio et/ou vidéo à accès non commandé décodé à partir du module hôte vers le CAM en vue de son traitement par le module de données d'identification ; et
le CAM est configuré pour communiquer, par l'intermédiaire de la liaison de flux de transport crypté, le contenu audio et/ou vidéo à accès non commandé décodé filigrané au module hôte.

11. Procédé de fonctionnement d'un récepteur de contenu audio et/ou vidéo doté d'un module hôte et d'un module d'accès conditionnel (CAM), le procédé comprenant :
la réception (200) d'un contenu audio et/ou vidéo à accès commandé codé à partir d'une source de contenu ;
le traitement (220) par le CAM du contenu audio et/ou vidéo à accès commandé codé afin de générer un contenu audio et/ou vidéo à accès non commandé codé ;
la communication par le CAM du contenu audio et/ou vidéo à accès non commandé au module hôte par l'intermédiaire d'une liaison de flux de transport crypté ;
le décodage (230) par le module hôte du contenu audio et/ou vidéo à accès non commandé codé afin de générer un contenu audio et/ou vidéo à accès non commandé décodé ;
la réception (240) par le CAM, à partir de la source du contenu, d'un message de commande indiquant qu'une partie ou la totalité du contenu audio et/ou vidéo à accès commandé doit être traitée pour appliquer un filigrane numérique ;
en réponse à la réception du message de commande, la demande (260) par le CAM d'au moins une partie du contenu audio et/ou vidéo à accès non commandé décodé au module hôte en vue de son traitement afin d'appliquer le filigrane numérique ;
la communication (280) par le module hôte, par l'intermédiaire de la liaison de flux de transport crypté, de l'au moins une partie du contenu audio et/ou vidéo à accès non commandé décodé au CAM pour l'application de données d'identification ;
la génération (290) par le CAM d'un contenu audio et/ou vidéo à accès non commandé décodé filigrané en traitant le contenu audio et/ou vidéo à accès non commandé décodé communiqué au CAM par le module hôte pour appliquer le filigrane numérique à ce contenu audio et/ou vidéo à accès non commandé décodé ; et
la communication par le CAM du contenu audio et/ou vidéo à accès non commandé décodé filigrané au module hôte par l'intermédiaire de la liaison de flux de transport crypté.

12. Procédé de fonctionnement d'un module hôte destiné à être utilisé dans un récepteur de contenu audio et/ou vidéo et pouvant être connecté à un module d'accès conditionnel (CAM) exploitable pour générer un contenu audio et/ou vidéo à accès non commandé décodé filigrané en appliquant un filigrane numérique à un contenu audio et/ou vidéo à accès non commandé décodé, le procédé comprenant :
la réception (1800) d'un contenu audio et/ou vidéo à accès commandé codé à partir d'une source de contenu ;
la communication (1810) du contenu audio et/ou vidéo à accès commandé codé au CAM ;
la réception (1820) du contenu audio et/ou vidéo à accès non commandé codé à partir du CAM par l'intermédiaire d'une liaison de flux de transport crypté ;
le décodage du contenu audio et/ou vidéo à accès non commandé codé pour générer un contenu à accès non commandé décodé ;
la réception d'une demande d'au moins un sous-ensemble du contenu audio et/ou vidéo à accès non commandé décodé à partir du module hôte en vue de son traitement afin d'appliquer le filigrane numérique ;
la communication (1830), par l'intermédiaire de la liaison de flux de transport crypté, de l'au moins un sous-ensemble du contenu audio et/ou vidéo à accès non commandé décodé au CAM en vue de son traitement pour appliquer le filigrane numérique, en réponse à la réception de la demande de l'au moins un sous-ensemble du contenu audio et/ou vidéo à accès non commandé décodé ; et
la réception (1840) du contenu audio et/ou vidéo à accès non commandé décodé filigrané à partir du CAM par l'intermédiaire de la liaison de flux de transport crypté.

13. Procédé de fonctionnement d'un module d'accès conditionnel (CAM) destiné à être utilisé dans un récepteur de contenu audio et/ou vidéo doté d'un module hôte configuré pour recevoir un contenu à accès commandé codé à partir d'une source de contenu et décoder un contenu à accès non commandé codé afin de générer un contenu à accès non commandé décodé, le procédé comprenant :
le traitement (1900) d'un contenu audio et/ou vidéo à accès commandé codé afin de générer un contenu audio et/ou vidéo à accès non commandé codé ;
la communication (1910) du contenu audio et/ou vidéo à accès non commandé codé au module hôte par l'intermédiaire d'une liaison de flux de transport crypté ;
la réception, à partir de la source du contenu, d'un message de commande indiquant qu'une partie ou la totalité du contenu audio et/ou vidéo à accès commandé doit être traité pour appliquer le filigrane numérique ;
en réponse à la réception du message de commande, la demande d'au moins un sous-ensemble du contenu audio et/ou vidéo à accès non commandé décodé au module hôte en vue de son traitement ;
la réception (1920) de l'au moins un sous-ensemble du contenu audio et/ou vidéo à accès non commandé décodé à partir du module hôte par l'intermédiaire de la liaison de flux de transport crypté ;
la génération (1930) d'un contenu audio et/ou vidéo à accès non commandé décodé filigrané en traitant le contenu audio et/ou vidéo à accès non commandé décodé reçu à partir du module hôte pour appliquer le filigrane numérique à ce contenu audio et/ou vidéo à accès non commandé ; et
la communication (1940) du contenu audio et/ou vidéo à accès non commandé décodé filigrané au module hôte par l'intermédiaire de la liaison de flux de transport crypté.

14. Logiciel informatique qui, à son exécution par un ordinateur, amène l'ordinateur à réaliser le procédé selon l'une quelconque des revendications 11 à 13.
